# EUROPÄISCHE PATENTSCHRIFT

(11) **EP 1 683 958 B1**
(45) Veröffentlichungstag und Bekanntmachung des Hinweises auf die Patenterteilung: **29.10.2008**
(21) Anmeldenummer: 05024019.1
(22) Anmeldetag: 07.01.2005
(51) Int. Cl.: F02M 31/13

(54) **Heinzflansch mit geometrisch stabiler Struktur**
Heating flange with geometrically stable structure
Bride d'échauffement avec structure géométrique stable

(43) Veröffentlichungstag der Anmeldung: 26.07.2006
(62) Teilanmeldung aus: 05000258.3
(73) Patentinhaber: DBK David + Baader GmbH, 76870 Kandel/Pfalz (DE)
(72) Erfinder: Gschwind, Thomas, Dipl.-Ing., 67098 Bad Dürkheim (DE); Proner, Mathias, Dipl.-Ing, 76139 Karlsruhe/Baden (DE)
(74) Vertreter: Grünecker, Kinkeldey, Stockmair & Schwanhäusser Anwaltssozietät

(56) Entgegenhaltungen:
- WO-A-99/53187
- JP-A- 60 075 753
- US-A- 4 463 721

## Beschreibung

Die vorliegende Erfindung betrifft einen Heizflansch zur Erwärmung eines durch einen Strömungsquerschnitt strömenden Gasstromes, wobei der Heizflansch in eine Ansaugleitung einer Verbrennungskraftmaschine ein- oder zwischensetzbar ausgestaltet ist und wenigstens einen Heizleiter, der sich durch den Strömungsquerschnitt von einer Befestigungsstelle zu einer unmittelbar folgenden weiteren Befestigungsstelle am Heizflansch erstreckt, sowie einen Halteschenkel aufweist, der mit wenigstens einer der Befestigungsstellen versehen ist.

Heizflansche der gattungsgemäßen Art werden vomehmlich zur Erwärmung des Ansaugluftstroms in einer zu einer Verbrennungskraftmaschine führenden Ansaugleitung eingesetzt. Sie kommen speziell bei Dieselmotoren zum Einsatz, um einen Kaltstart zu erleichtern.

In der DE 105 15 533 C2 ist ein Heizflansch beschrieben, bei dem ein mäanderförmig verlaufender Heizleiter auf einem Trägerstab befestigt ist. Jedoch ist der Heizleiter lediglich in der Mitte der geraden Mäanderwindungen, nicht aber an den Mäanderkehren, am Trägerstab angebracht. Dadurch kann es bei den starken Vibrationen, denen ein Heizflansch in einer zu einer Verbrennungskraftmaschine führenden Ansaugleitung ausgesetzt ist, zu Berührungen benachbarter Heizleiterkehren kommen, was zu einem Kurzschluss führt.

Dieses Problem ist bei der WO 99/53187 A1 behoben worden, indem die Kehren des Heizmäanders in zwei Haltevorrichtungen untergebracht sind. Die beiden Halter sind miteinander verbunden und einander gegenüberliegend angeordnet, so dass die geraden Abschnitte des Heizmäanders zwischen den beiden Halten parallel verlaufen.

In der WO 00/34643 A1 ist eine Weiterentwicklung der WO 99/53187 A1 beschrieben, bei der die parallel angeordneten Halteeinrichtungen an zwei sich gegenüberliegenden Wänden eines geschlossenen Rahmens des Heizflansches befestigt sind.

Jedoch ergibt sich sowohl bei der WO 99/53187 A1 als auch bei der WO 00/34643 A1 das Problem, dass der Heizleiter nicht fest an die Halterungen oder den Rahmen angebracht werden kann, weil sich der Heizleiter und der Rahmen im Betrieb des Heizflansches unterschiedlich stark ausdehnen. Aus diesem Grund werden die Halter der Heizleiter vomehmlich über ein Federelement, das die unterschiedlichen Längenausdehnungen kompensiert, wie beispielsweise in der WO 99/53187 A1, der WO 00/34643 A1 oder auch der DE 102 57 921 B3 beschrieben, am Rahmen angebracht.

Eine feste Verbindung des Heizleiters mit dem Rahmen bei gleichzeitig fedemder Lagerung des Heizleiters zum Ausgleich der unterschiedlichen Längenausdehnungen wird bei der Vorrichtung der DE 102 14 166 A1 durch eine abgewinkelte Form der Schenkel der Mäanderschleifen erreicht. Der Heizflansch der DE 102 14 166 A1 umfasst einen geschlossenen Grundkörper mit einem Haltebügel und ein fest mit dem geschlossenen Grundkörper verbundenes Heizelement, das als Mäanderschleife ausgestaltet ist.

Allerdings ist bei den bekannten Heizflanschen die Herstellung, Montage und Wartung problematisch.

Aufgabe der vorliegenden Erfindung ist es daher, einen verbesserten Heizflansch einfacher und robuster Bauart zu schaffen, der leichter herzustellen, zu montieren und zu warten ist.

Diese Aufgabe wird für einen Heizflansch der eingangs genannten Art dadurch gelöst, dass sich der Heizleiter bogenförmig von der einen, am Rand des Strömungsquerschnittes angeordneten Befestigungsstelle im Wesentlichen frei durch den Strömungsquerschnitt zu der weiteren, ebenfalls am Rand des Strömungsquerschnittes und an dem einen Halteschenkel angeordneten Befestigungsstelle erstreckt.

Mit bogenförmig ist hierbei nicht nur ein Bogen betsehend aus einem oder mehreren Kreissegmenten gemeint, sondern auch ein offenes Polygon, welches sich bogenartig mit geraden Segmenten zwischen den Befestigungsstellen durch den Strömungsquerschnitt erstreckt und mit dem Halteschenkel beispielsweise ein Trapez oder Rechteck bildet. Selbstverständlich kann die Bogenform auch eine Kombination aus Kreis- und geraden Segmenten darstellen.

Ferner wird diese Aufgabe dadurch gelöst, dass die Längsachse des einen Halteschenkels einerseits mit zwei Heizschenkeln des Heizleiters zwischen der einen und der weiteren, ebenfalls an dem einen Halteschenkel angeordneten Befestigungsstelle, oder andererseits sowohl mit der Längsachse eines weiteren Halteschenkels, an dem die weitere Befestigungsstelle vorgesehen ist, als auch mit der Gerade durch die eine und die weitere Befestigungsstelle ein Dreieck bildet.

Durch diese überraschend einfache konstruktive Maßnahme ist es möglich, eine besonders einfache und gleichzeitig robuste Bauweise eines Heizflansches zu erreichen. Die statisch stabile Dreiecks - oder Bogenstruktur verleiht dem Heizflansch eine besonders gute Festigkeit, so dass der erfindungsgemäße Heizflansch problemlos den starken Vibrationen in einer Ansaugleitung ausgesetzt werden kann. Im Unterschied zu der WO 99/53187 A1 und der WO 00/34643 A1 muss der erfindungsgemäße Heizleiter nicht federnd zwischen zwei einander gegenüberliegenden Halteschenkeln angebracht sein, sondern kann fest mit den Halteschenkeln verbunden sein, da die Dreiecks - oder Bogenstruktur auch eine Kompensation der Längenausdehnung unterstützt. Zudem sind bei dieser Anordnung die Verbindungsstellen des Heizelementes mit dem Rahmen zu Montage- und Wartungszwecken leichter zugänglich als bei den oben genannten, aus dem Stand der Technik bekannten Heizflanschen. Eine geschlossene Rahmenform ist bei der erfindungsgemäßen Lösung nicht mehr zwingend notwendig, weil die stabile geometrische Struktur ausreichende Festigkeit und Steifigkeit bietet.

Der solchermaßen verbesserte Heizflansch kann durch verschiedene, voneinander unabhängige und jeweils für sich vorteilhafte Ausgestaltungen weiterentwickelt sein. Die einzelnen Ausführungsformen können dabei unabhängig voneinander kombiniert werden. Auf diese Ausgestaltungen und die mit den Ausgestaltungen jeweils verbundenen Vorteile wird im Folgenden kurz eingegangen.

Die Heizvorrichtung des erfindungsgemäßen Heizflansches umfasst wenigstens einen Heizleiter, der sich im eingesetzten Zustand des Heizflansches durch den Strömungsquerschnitt, der von den Halteschenkeln begrenzt bzw. aufgespannt und vom Gasstrom durchströmt wird, erstreckt und dem Ansaugluftstrom ausgesetzt ist. Der Heizleiter kann beispielsweise ein Widerstandsdraht, ein Heizstab oder ein Heizband sein.

Gemäß einer ersten Ausführung ist es möglich, dass sich mindestens ein weiterer Heizleiter durch den Strömungsquerschnitt erstreckt. Der Einsatz mehrerer Heizleiter innerhalb eines Strömungsquerschnittes des Heizflansches gestattet es, einerseits eine größere Wärmemenge vom Heizleiter an die vorbeiströmende Luft zu übertragen. Andererseits kann der Wärmeübergang wesentlich genauer gesteuert werden, beispielsweise indem ein Heizleiter bei Bedarf zu- bzw. abgeschaltet wird.

Gemäß einer weiteren Ausführungsform kann der Heizleiter als ein Heizmäander mit mehreren, zwischen zwei Befestigungsstellen angeordneten Heizleiterabschnitten ausgebildet sein und sich mäanderförmig wiederholt durch den Strömungsquerschnitt erstrecken. Ein Heizleiter mit mehreren Heizleiterabschnitten verbessert, wie die Ausgestaltung mit mehreren separaten Heizelementen, den Wärmeübergang vom Heizflansch auf die strömende Luft. Als zusätzlicher Vorteil verringert sich aber bei einem Heizmäander die Anzahl der benötigten elektrischen Anschlussstellen, was zu einem geringeren Materialverbrauch und einer vereinfachten Montage führt.

Um längere Heizleiter mit einer großen Oberfläche im Strömungsquerschnitt des Heizflansches unterzubringen, kann der Heizleiter mindestens zwei gerade Heizschenkel aufweisen, die mindestens einen Winkel bilden. Heizschenkel stellen die Abschnitte eines Heizleiters bzw. eines Heizleiterabschnittes dar, welche zwischen einer Befestigungsstelle und einer Knickstelle oder zwischen zwei Knickstellen liegen. Es sind erfindungsgemäß auch Ausführungen möglich, bei denen ein Heizleiter an mehreren Knickstellen abgewinkelt ist. Hierbei sind Ausführungen von in etwa linear bis annähernd bogenförmig denkbar, mit denen ein längerer Heizleiter zwischen zwei Befestigungspunkten angebracht werden kann. Dadurch wird der Wärmeübergang verbessert, ohne die kompakte Bauform des Heizflansches ändem zu müssen.

In einer besonders vorteilhaften Ausgestaltung kann der Winkel des Heizleiters in etwa der rechte Winkel sein. In dieser Form bildet der Heizleiter einen im Wesentlichen L-förmigen Querschnitt im Strömungsquerschnitt. Auf diese Weise entsteht ein Heizflansch mit einem kompakten Heizleiter, der eine sehr großer Oberfläche für einen effektiven Wärmeübergang aufweist.

Gemäß einer weiteren vorteilhaften Ausgestaltung kann der wenigstens eine Heizleiter als ein elektrischer, im Wesentlichen bandförmiger Heizleiter ausgeformt sein. Auf diese Weise besitzt der Heizleiter eine große, von der Ansaugluft umströmbare Fläche und ermöglicht einen besonders guten Wärmeübergang zwischen dem Heizleiter und der zu erwärmenden Ansaugluft. Vomehmlich weisen die flachen Randseiten des Heizbandes in Strömungsrichtung der Ansaugluft, um der Ansaugluft einen möglichst geringen Strömungswiderstand entgegenzusetzen. Es ist aber auch möglich, das Heizband schräg zur Strömungsrichtung der Ansaugluft anzubringen. Dadurch entsteht eine Verwirbelung der Ansaugluft und man erreicht eine bessere Durchmischung der erwärmten Ansaugluft.

Um eine möglichst große effektive Heizfläche im Strömungsquerschnitt des Heizflansches unterzubringen und dabei zu vermeiden, dass sich die verschiedenen Heizleiter bzw. Heizleiterabschnitte im Betrieb berühren, ist es vorteilhaft, wenn die Heizleiterabschnitte eines Heizleiters und/oder verschiedener Heizleiter im Strömungsquerschnitt im Wesentlichen parallel angeordnet sind. Somit ist stets ein definierter und gleichbleibender Abstand zwischen den stromdurchflossenen Heizelementen gewährleistet, wodurch die Gefahr von Kurzschlüssen durch Berührungen benachbarter Heizleiter reduziert wird.

Eine besonders große Heizfläche kann gemäß einer weiteren Ausführung dadurch geschaffen werden, dass die Heizleiterabschnitte eines Heizleiters und/oder verschiedener Heizleiter unterschiedliche Längen aufweisen und ineinander geschachtelt im Strömungsquerschnitt angeordnet sind. Bei der Verwendung verschiedener Heizleiter unterschiedlicher Länge ergibt sich ferner der Vorteil, dass die Heizleistung des Heizflansches variiert werden kann. Über eine gezielte Ansteuerung einzelner Heizleiter ist man in der Lage, die Länge der heizenden Heizleiter und somit die effektive Heizfläche des Heizflansches gezielt zu verändern.

Aus dem Stand der Technik bekannte Heizflansche der eingangs genannten Art, wie beispielsweise in der WO 99/53187 A1 oder der WO 00/34643 A1, weisen Federelemente zwischen den Heizleitern und den Halteschenkeln auf, die die Längenausdehnung des Heizleiters bei dessen Erwärmen auffangen. Allerdings ist der Einsatz von Federn mit zusätzlichen Bauteilen und einer aufwendigen Montage einerseits, sowie einer geringeren Stabilität der Verbindung zwischen Heizleiter und Rahmen andererseits verbunden. Gemäß einer vorteilhaften Ausführungsform kann der Heizleiter einen sich im Wesentlichen frei zwischen den Befestigungsstellen erstreckenden Wärmeverformungsabschnitt im Strömungsquerschnitt aufweisen, dessen Verformbarkeit bei Erwärmen des Heizleiters größer als die Verformbarkeit seiner Umgebung ist. Somit sind keine fedemden Elemente zur Kompensation der thermischen Ausdehnung des Heizleiters notwendig, da die Längenausdehnung aufgrund der Form der Heizleiter gezielt an den Verformungsabschnitten auftritt.

Prinzipiell kann man entweder die Verformbarkeit des Heizleiters in den Wärmeverformungsabschnitten gegenüber deren Umgebung erhöhen oder die Verformbarkeit der Umgebung gegenüber den Verformungsabschnitten herabsetzen, damit die Längenausdehnung des Heizleiters bevorzugt in den Wärmeverformungsabschnitten auftritt.

Im ersten Fall kann der Wärmeverformungsabschnitt einen kleineren Querschnitt als seine Umgebung aufweisen. Ein verringerter Querschnitt bedeutet eine geringere Festigkeit bzw. Steifigkeit, wodurch die bei der thermischen Erwärmung auftretenden Spannungen bevorzugt in den weniger stabilen Abschnitten abgebaut werden.

Eine weitere Möglichkeit, die Verformbarkeit im Wärmeverformungsabschnitt zu erhöhen, ist, dass die Längsachse des Heizleiters im Wärmeverformungsabschnitt einen Richtungswechsel aufweist. Durch eine Richtungsänderung, wie beispielsweise einem Bogen oder Knick des Heizleiters, wirken die im Wesentlichen in Längsrichtung auftretenden Spannungen nicht bevorzugt nur axial in Längsrichtung, sondern üben auch eine radiale Kraft auf den Heizleiter aus , was zu zusätzlichen Biegespannungen und einer besseren Verformbarkeit in diesen Bereichen führt.

Ein weiteres Problem bei Heizflanschen besteht jedoch darin, dass sich bei starken Vibrationen nicht befestigte, benachbarte Abschnitte verschiedener Heizleiter bzw. eines Heizmäanders berühren, was zu einem Kurzschluss führt.

Um Kurzschlüsse zu vermeiden, kann der Heizleiter gemäß einer weiteren vorteilhaften Ausführungsform zwischen den Befestigungspunkten mindestens einmal an einer Knickstelle abgewinkelt sein. Unter Knickstelle ist dabei nicht nur ein abruptes Abwinkeln des Heizleiters mit einer Unstetigkeitsstelle, wie es beispielsweise am Scheitel eines Winkels auftritt, zu verstehen. Vielmehr kann die Knickstelle auch einen stetig vollzogenen, gebogenen Übergang im Größenbereich der Materialstärke mit kleinem Radius aufweisen.

An der Knickstelle des Heizleiters findet erstens dessen thermische Längenausdehnung, die aufgrund der hohen Temperaturen des Heizleiters im Betrieb des Heizflansches auftritt, in eine definierte Richtung statt. Zweitens wird der Heizleiter durch die Knickstelle, welche vorzugsweise in einem der Ansaugluft ausgesetzten Bereich liegt, aber auch versteift, weil eine Knickstelle einen langen geraden, labilen Heizleiterabschnitt in zwei kürzere und stabilere gerade Bereiche unterteilt.

In einer weiteren vorteilhaften Ausgestaltung können die Knickstellen der durch den Strömungsquerschnitt verlaufenden Heizleiterabschnitt eines Heizleiters und/oder verschiedener Heizleiter im Wesentlichen auf einer Linie liegen. Diese Linie kann im Wesentlichen beispielsweise von einem Punkt ausgehen, der in etwa in der Mitte eines Halteschenkels oder der Nähe des Schnittpunktes der Längsachsen zweier Halteschenkel liegt, und vom diesem Ausgangspunkt in Richtung der Knickstellen des Heizleiters verlaufen. Die Linie kann insbesondere die Mittelsenkrechte eines Schenkels oder die Winkelhalbierende des Winkels der von den Längsachsen zweier Halteschenkel und/oder zweier Heizschenkel an den Knickstellen gebildet wird, darstellen.

Die zweite Möglichkeit, die Verformbarkeit der Wärmeverformungsbereiche größer als die Verformbarkeit der Umgebung zu gestalten ist, die Umgebung zu versteifen bzw. stabilisieren.

Für eine erhöhte Vibrationsstabilität der sich in den Strömungsquerschnitt erstreckenden Heizleiter kann der Heizleiter Stabilisierungsbereiche aufweisen, die zumindest teilweise mit Versteifungsprofilen versehen sind, durch welche die Biegesteifigkeit in Längsrichtung des Heizleiters erhöht ist. Die Profilierungen, beispielsweise H-, L-, T-, U-, Z-, Ω- oder bogenförmige Querschnitte in einer Ebene senkrecht zur Längsachse des Heizschenkels, führen zu einer Versteifung der Heizleiter in diesen Abschnitten. Dadurch können Bewegungen der Heizleiter eingeschränkt und Berührungen benachbarter Heizleiter und Kurzschlüsse der Heizeinrichtung vermieden werden.

In einer bevorzugten Ausführungsform ist vorgesehen, dass ein im Wesentlichen bandförmiger Heizleiter mindestens eine sich in Längsrichtung des Heizleiters erstreckende Sicke aufweisen kann. Die Sicken können ebenfalls mit verschiedenen Querschnittsformen, beispielsweise einem winkel-, bogen-, S-, kasten- oder trapezförmigen Querschnitt, ausgeformt sein. Sicken sind einfach zu fertigen und ermöglichen eine Versteifung des Heizleiters. Ferner vergrößert sich durch eine Sicke die Oberfläche des Heizleiters und die Ansaugluft wird an der Sicke verwirbelt und durchmischt, wodurch der Wärmeübergang vom Heizleitern an die Ansaugluft ebenfalls verbessert wird. Die in Längsrichtung versteifte Ausgestaltung des Heizleiters bzw. der Heizschenkel führt außerdem dazu, dass die entstehenden Spannungen der thermischen Ausdehnung bei einer Ausgestaltung mit Knickstellen verstärkt in den Verformungsbereichen in eine definierter Richtung abgebaut werden, weil die Sicken oder Versteifungsprofile eine Biegung der geraden Abschnitte verhindern.

Weil eine Ausgestaltung mit Wärmevertormungsabschnitten des Heizleiters die Längenausdehnung bei Erwärmen aufgrund der besonderen Heizleiterform kompensieren kann, ist es somit möglich, auf federnde Elemente zwischen dem Heizleiter und den Halteschenkeln zu verzichten. Daher kann der Heizleiter an den Befestigungsstellen mit dem jeweiligen Halteschenkel im Wesentlichen starr verbunden sein, was die Stabilität des Heizflansches erhöht.

Eine besonders vorteilhafte Ausführung ergibt sich, wenn man die Vorteile der starren und unbeweglichen Befestigung des Heizleiters an den Halteschenkeln mit der gezielten Längenausdehnung im Wärmevertormungsbereich kombiniert.

Eine solche Ausführungsform kann beispielsweise ein Heizmäander sein, der erstens an jeder Befestigungsstelle starr am jeweiligen Halteschenkel angebracht ist. Zweitens könnte der Heizleiter in jedem seiner Abschnitte zwischen zwei Befestigungspunkten mindestens eine Knickstelle vorzugsweise genau eine in etwa rechtwinkelige Knickstelle aufweisen. Schließlich kann man die Abschnitte des Heizleiters zwischen einer Befestigungsstelle und der Knickstelle noch mit Sicken oder anderen Profilen versteifen. Auf diese Weise ist es möglich, einen kompakten und robusten Heizflansch mit einem besonders langen Heizmäander zu versehen. Der Heizmäander ist dabei einerseits fest an den Schenkeln angebracht, und andererseits zu einer gerichteten Längenausdehnung an den Knickstellen fähig ist. Erfindungsgemäß sind die Knickstellen so angelegt, dass die Längenausdehnung des Heizmäanders in eine definierte Richtung, nämlich entlang der Linie durch die Knickstellen, verläuft, wodurch Berührungen benachbarter Abschnitte des Heizmäanders und somit Kurzschlüsse verhindert werden.

Weitere Ausführungsformen ermöglichen eine besonders vorteilhafte Herstellung und Montage des erfindungsgemäßen Heizflansches. Der Heizleiter ist bei einer weiteren Ausführungsform nicht direkt mit den Schenkeln verbunden, sondern es kann an jeder Befestigungsstelle eines Halteschenkels zwischen dem Heizleiter und dem jeweiligen Halteschenkel ein Isolationskörper vorgesehen sein und als Befestigungskörper dienen, durch den der Heizleiter am jeweiligen Schenkel befestigt ist. Über den Isolationskörper, welcher sowohl mit dem Heizleiter als auch den Befestigungsstellen der Schenkel fest verbunden ist, ist es möglich, den Heizleiter einfach an den Rahmen des Heizflansches zu montieren. Dazu kann der Isolationskörper beispielsweise am Rahmen verschweißt werden, was fertigungstechnisch einfach und materialsparend ist.

Als elektrisch isolierenden Material können beispielsweise Kunststoff, Glimmer, Keramik oder Mikanit verwendet werden, so kann der Schenkel auf ein anderes Potenzial als der Heizleiter, beispielsweise auf Masse, gelegt werden. Außerdem benötigt diese Ausführung weniger Material, weil die Isolation nur an den unmittelbaren Kontaktstellen zwischen Schenkel und Heizleiter angebracht ist.

Vorzugsweise ist der Isolationskörper über ein Befestigungsmittel, beispielsweise eine Schraube mit entsprechender Mutter, einen Clip oder eine Niete mit dem Heizleiter verbunden. Auf diese Weise erreicht man eine besonders sichere Verbindung mit hoher Festigkeit zwischen Heizleiter und Isolationskörper.

Ist der Heizleiter beispielsweise ein Heizmäander, der entweder zwischen den Befestigungsstellen eines Halteschenkels oder mehrerer Halteschenkeln hin- und hergeführt wird, so ist jeweils ein Isolationskörper mit einer Umlenkstelle des Heizmäanders verbunden. Umlenkstellen sind die befestigten Bereiche des Heizmäanders, an denen der Heizleiter nach Erreichen des Halteschenkels umgelenkt und wieder zurück in den Strömungsquerschnitt geführt wird. Der Heizmäander weist an einer Umlenkstelle eine im Strömungsquerschnitt im Wesentlichen U-förmige Form mit beispielsweise bogenförmiger oder ebener Basis auf. Eine Umlenkstelle mit ebener Basis, die einen kurzen flachen Abschnitt zwischen zwei Knicken von etwa 90° besitzt, erweist sich als besonders vorteilhaft, weil eine große Kontakt- und Auflagefläche der Basis der Umlenkstelle für den Isolationskörper eine sichere Verbindung hoher Festigkeit ermöglicht.

In einer weitere Ausführungsform können der Heizleiter, vorzugsweise ein Heizmäander, und die mit dem Heizleiter verbundenen Isolationskörper als eine einstückig handhabbare Einheit ausgestaltet sein. Diese Ausführung ist aus fertigungstechnischer Sicht besonders vorteilhaft. In einem einzigen Biege- und Verformschritt kann aus einem flachen, bandförmigen Heizleiter ein gewinkelter Heizmäander mit Versteifungen durch Knickstellen und Längssicken geformt werden. Anschließend bringt man jeweils einen Isolationskörper mit einem Befestigungsmittel an jeder Umlenkstelle des Heizmäanders an, ohne dass die Zugänglichkeit der Befestigungsstellen durch den Rahmen des Heizflansches beeinträchtigt ist. Die so vormontierte Einheit von Heizleiter und Isolationsplatten kann als ein Fertigungsteil an den Befestigungsstellen der Schenkeln des Heizflansches angebracht, beispielsweise verstanzt oder verklemmt werden.

Femer besteht auch die Möglichkeit, dass die einstückig handhabbare Einheit aus Heizleiter und Isolationskörpem wiederholt von den Befestigungsstellen der Schenkel lösbar ist. Diese Ausführungsform ist bezüglich der Wartung des Heizleiters günstig, weil ein Heizleiter bei einem Defekt oder geänderten Anforderungen an den Heizflansch wiederholt von den Befestigungsstellen des Rahmens gelöst und nach einer Reparatur bzw. einem Austausch gegen einen anderen Heizleiter, beispielsweise durch Anschrauben, erneut am Rahmen angebracht werden kann. Deshalb ist der Heizflansch leicht zu montieren und besonders wartungsfreundlich.

Gemäß einer weiteren Ausführung kann an der Befestigungsstelle eine Aussparung so ausgeformt sein, dass der Isolationskörper in der Aussparung vorzugsweise formschlüssig aufgenommen ist. Hierbei bilden die Aussparung und der Isolationskörper eine verdrehsichere, offene Geradführung, bei welcher der Isolationskörper im Wesentlichen geradlinig in eine Einsteckrichtung, die vomehmlich senkrecht zum Strömungsquerschnitt verläuft, in die Aussparung gesteckt bzw. eingesetzt werden kann. Zur Sicherung der geradlinigen Bewegung weisen die Aussparung und/oder der Isolationskörper Führungsflächen auf, an denen sich die beiden Teile berühren. Der Isolationskörper stellt also ein Vollprisma und die Aussparung ein entsprechend ausgestaltetes Hohlprisma dar, das das Vollprisma aufnimmt.

Mit dem Ausdruck Prisma bezeichnet man bei Geradführungen einen Körper, dessen überall gleicher Querschnitt einer beliebige begrenzte Figur repräsentiert. Ein solcher Querschnitt kann beispielsweise rechteckig, trapezförmig oder dreieckig sein. Auf diese Weise ist der Isolationskörper, mit Ausnahme der Einsteckrichtung, in der Aussparung festgelegt. Durch diese konstruktiv einfache Maßnahme ist es möglich, die vormontierte Einheit von Heizleiter mit den Isolationskörper nach Aufnahme in der Aussparung fertigungstechnisch besonders einfach, beispielsweise durch Verschrauben, Verklemmen oder Verstanzen der Isolationsplatten an den Schenkeln anzubringen.

Werden die Abmessungen der Aussparung passgenau auf die Außenabmessungen der Isolationskörper abgestimmt, ist es möglich, die Isolationskörper in der Aussparung der Befestigungsstelle in einer Einsteckrichtung, die im Wesentlichen senkrecht zum Strömungsquerschnitt verläuft, kraftschlüssig und in den beiden senkrecht zur Einsteckrichtung verlaufenden Raumrichtungen formschlüssig zu halten.

In einer weiteren vorteilhaften Ausgestaltung kann der Isolationskörper als eine Isolationsplatte geformt sein. Die Aussparungen der Befestigungsstellen an den Schenkeln des Rahmens bilden eine an die Isolationsplatte angepasste, vorzugsweise T-förmige Nut. Eine solche Nut stellt einen Einsteckschlitz dar, in welche die Isolationsplatte als Nutenstein eingesetzt werden kann. Eine Platte besitzt eine große Kontaktfläche sowohl mit dem flachen Abschnitt der Umlenkstelle des Heizmäanders als auch mit dem Einsteckschlitz, so dass eine sehr feste Verbindung entsteht. Auf diese Weise können alle Teile des Heizflansches fest, ohne Freiheitsgrade miteinander verbunden werden.

Gemäß einer weiteren vorteilhaften Ausführungsform können zwei Halteschenkel einen offenen Rahmen in Form eines Winkels bilden. Durch die offene Bauweise sind die Befestigungsstellen sehr gut zugänglich, wodurch die Montage des Heizflansches wesentlich erleichtert wird. Die beiden Schenkel des gewinkelten Rahmens spannt den Strömungsquerschnitt auf, wobei die materialsparende Winkelform weiterhin eine kostengünstigere Herstellung ermöglicht. Der Strömungsquerschnitt ist die Fläche des Heizflansches, welche von den Längsachsen der beiden Schenkel aufgespannt und von der Ansaugluft durchströmt wird. Schließlich kann über die freie Wahl des Winkelmaßes von etwa 45° bis 135°, vorzugsweise um die 90°, der Rahmen an die geometrischen Beschaffenheiten der Einbaustelle des Heizflansches oder des Querschnittes der Ansaugleitung angepasst werden. Diese winkelförmige Ausführungsform als Heizwinkel bewirkt eine einfache, aber kompakte und robuste Bauform.

In einer weiteren Ausführung ist es möglich, dass die Längsachsen der Halteschenkel im Wesentlichen senkrecht zueinander angeordnet sind. Dabei können die Schenkel unmittelbar miteinander verbunden sein und in einer zum Strömungsquerschnitt parallelen Ebene einen im Querschnitt im Wesentlichen L- oder T-förmigen Rahmen ausbilden. Es sind aber auch Ausführungen möglich, bei denen die Schenkel mit den Befestigungsstellen nicht unmittelbar miteinander verbunden sind, sondern an ein Verbindungsteil, beispielsweise einen dritten Schenkel des Rahmens, grenzen und über das Verbindungsteil rechtwinkelig zueinander angeordnet sind. In der in etwa rechtwinkligen Anordnung spannen Schenkel einer festgelegten Länge den größtmöglichen Strömungsquerschnitt auf, so dass bei geringer Baugröße des Heizflansches große Strömungsquerschnitte beheizt werden können.

Eine besonders vorteilhafte Ausführung kann erreicht werden, indem die im Wesentlichen senkrecht zueinander angeordneten Schenkel an ihren Enden miteinander verbunden sind, so dass die Halteschenkel in einer zum Strömungsquerschnitt parallelen Ebene einen im Querschnitt im Wesentlichen L-förmigen Rahmen ausbilden. So kann eine gute Zugänglichkeit der Befestigungsstellen bei materialsparender, besonders stabiler und kompakter Bauform des Heizwinkels mit einem großen Strömungsquerschnitt geschaffen werden.

Gemäß einer weiteren Ausführungsform können mindestens drei Halteschenkel des Heizleiters einen im Wesentlichen geschlossenen Rahmen bilden. Auf diese Weise kann der Rahmen als ein beliebiges Vieleck in den Strömungsquerschnitt ragen. Die geschlossene, umlaufende Rahmenform ermöglicht eine zusätzliche Stabilität des Heizflansches sowie die Befestigung einer größeren Heizleiterzahl und/oder von längeren Heizleitern, da zusätzliche Heizschenkel vorhanden sind.

Für ein besonders einfaches Einbringen und Montieren des Heizflansches in die Ansaugleitung kann gemäß einer weiteren Ausführungsform ein Halteschenkel des Rahmens einstückig mit einem Montageflansch ausgebildet sein. Über den Montageflansch lässt sich der Heizflansch mit der Heizeinrichtung in der Ansaugleitung befestigen. Die Befestigung kann der beispielsweise über eine Schraub-, Clip-, Schweiß- oder Klemmverbindung erfolgen.

Der Montageflansch erleichtert nicht nur das Anbringen des erfindungsgemäßen Heizflansches in einer Gasleitung, wie der Ansaugleitung einer Verbrennungskraftmaschine. Zusätzlich ermöglicht der Montageflansch eine einfache Abdichtung der Montageöffnung der Leitung mit dem Heizflansch. Dazu kann im montierten Zustand des Heizflansches zwischen dem Montageflansch und der Ansaugleitung ein Dichtmittel angeordnet sein. Als Dichtmittel können beispielsweise eine Flachdichtung oder ein O-Ring eingesetzt werden, welche auf einen Absatz des Montageflansches aufliegen bzw. in eine umlaufende Nut des Absatzes eingesetzt sind. Auf diese Weise liegt das Dichtmittel im eingebauten Zustand des Heizflansches zwischen dem Montageschenkel und der Außenwand der Gasleitung. Dadurch erfolgt bei einer Montage des Heizflansches gleichzeitig die Abdichtung der Montageöffnung der Gasleitung.

Eine sehr einfache, kostengünstige und schnelle Fertigung des Rahmens des Heizflansches, insbesondere mit den Aussparungen an den Schenkeln und dem einstückig angebrachten Montageflansch, ist durch eine Herstellung als Gussteil, vorzugsweise als Aluminiumdruckgussteil möglich. Alternativ kann die Fertigung auch als Strangprofil mit anschließender mechanischer Nachbearbeitung erfolgen.

Im Folgenden werden der Aufbau und die Funktion der Erfindung anhand von Ausführungsformen mit Bezug auf die Zeichnungen beispielhaft erläutert. Die unterschiedlichen Merkmale der einzelnen Ausführungsformen können dabei unabhängig voneinander von einer Ausführungsform auf die andere Ausführungsform übertragen oder weggelassen werden, wie dies oben bei den einzelnen vorteilhaften Ausgestaltungen bereits dargelegt wurde.

Es zeigen:
- Fig. 1: eine perspektivische Darstellung einer vorteilhaften Ausführungsform des erfindungsgemäßen Heizflansches;
- Fig. 2: eine Vollschnittdarstellung des Heizflansches der Fig. 1;
- Fig.3: eine schematische, perspektivische Darstellung gemäß einer zweiten Ausführungsform;
- Fig. 4: eine schematische Seitenansicht gemäß einer dritten Ausführungsform;
- Fig. 5: eine schematische Seitenansicht gemäß einer vierten Ausführungsform;
- Fig. 6: eine schematische Seitenansicht gemäß einer fünften Ausführungsform;
- Fig. 7: eine schematische Seitenansicht gemäß einer sechsten Ausführungsform;
- Fig. 8: eine schematische Seitenansicht gemäß einer siebten Ausführungsform.

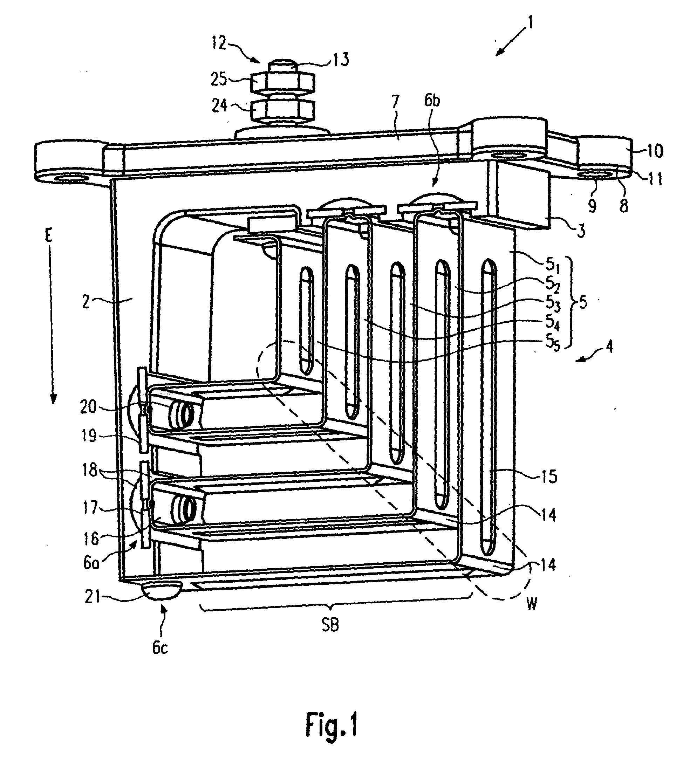

Fig. 1 verdeutlicht den Aufbau des erfindungsgemäßen Heizflansches in einer Ausführungsform, die beispielsweise zur Beheizung der Ansaugluft einer Verbrennungskraftmaschine verwendet wird.

Der Heizflansch 1 ist mit zwei ebenen Schenkeln 2, 3 versehen, an denen eine Heizeinrichtung 4 mit einem Heizleiter 5 angebracht ist. Der Heizleiter erstreckt sich von einer Befestigungsstelle 6a an dem einen Schenkel 2 zu einer weiteren Befestigungsstelle 6b an dem anderen Schenkel 3.

Gemäß der Ausführungsform nach Fig. 1 bilden die beiden, in etwa gleich langen Schenkel 2 und 3 einen offenen, als rechten Winkel ausgestalteten Rahmen. In dieser Ausführung spannen die beiden Halteschenkel den Strömungsquerschnitt des Heizflansches auf, wobei die Längsachsen der Schenkel im Wesentlichen senkrecht zueinander liegen. Der Strömungsquerschnitt ist bei dieser Rahmengestaltung die Fläche des Heizflansches, welche von den beiden Halteschenkeln 2, 3 aufgespannt und von der Ansaugluft durchströmt wird.

Der Rahmen des Heizflansches kann entlang einer Einsetzrichtung E, die parallel zur Längsachse des Schenkels 2 (in Folgenden Einsteckschenkel 2) verläuft, in die Ansaugleitung einer Verbrennungskraftmaschine (nicht in der Fig. 1 dargestellt) beispielsweise über einen Einbauschacht, der eine radiale Öffnung in der Ansaugleitung besitzt, eingesetzt werden. Nach Einsetzen des Heizflansches erstreckt sich der eine Einsteckschenkel 2 parallel zur Einsetzrichtung des Heizflansches. Der andere Schenkel (in Folgenden Montageschenkel 3) liegt parallel zur Öffnung des Einbauschachtes der Ansaugluftleitung. Im eingesetzten Zustand des Heizflansches bilden die beiden Schenkel 2 und 3 einen Rahmen mit einem in Strömungsrichtung im Wesentlichen L-förmigen Querschnitt. Der Rahmen spannt infolgedessen einen in etwa quadratischen Strömungsquerschnitt des Heizflansches auf.

Der Montageschenkel 3 ist einstückig mit einem Montageflansch 7 ausgebildet, welcher sich eben und parallel zum Schenkel 3 erstreckt. Dabei ist der Montageflansch 7 auf der vom Strömungsquerschnitt abgewandten Außenseite des Schenkels 3 angebracht, und liegt im eingebauten Zustand des Heizflansches außerhalb des Strömungsquerschnitts.

Der Montageflansch 7 besitzt einen umlaufenden Auflageabsatz 8, der in Einsetzrichtung E betrachtet nach allen Seiten über den Schenkel 3 hinausragt. An jedem seiner seitlich über den Schenkel 3 hinausragenden vier Eckpunkte besitzt der Rahmens des Montageflansches 7 eine runde Befestigungsöffnung 9, die sich in Einsetzrichtung E erstreckt. Die Befestigungsöffnung 9 liegt in einer Montagestelle 10, die seitlich über die Eckpunkte hinausragend, konzentrisch um die Befestigungsöffnung 9 als Auge ausgebildet ist. Anstelle dieser Ausführung kann der Montageflansch 7 auch für eine andere Befestigungsart, wie Verschweißen, Verklemmen, Verclippen oder Nieten ausgestaltet sein. Somit kann der Heizflansch 1 über die Befestigungsöffnung 9 der Montagestelle 10 an der Ansaugleitung fixiert, beispielsweise verschraubt werden.

Auf der dem Heizleiter 5 zugewandten Seite des Auflageabsatz 8 ist ein umlaufendes Dichtmittel 11, beispielsweise eine Flachdichtung angeordnet. Das Dichtmittel liegt im eingesetzten Zustand des Heizflansches zwischen der Außenwand der Ansaugluftleitung und dem Auflagenabsatz 8 des Montageflansches 7. Altemativ kann als Dichtmittel auch eine O-Ringdichtung in eine umlaufende Nut des Auflageabsatzes 8 angeordnet werden. Nach Einsetzen des Heizflansches 1 in den Einbauschacht kann der Heizflansch 1 über die Befestigungsöffnungen 9 in den Montagestellen 10 in der Ansaugleitung montiert werden, wobei das Dichtmittel 11 den Heizflansch gasdicht gegenüber der Ansaugleitung verschließt.

Die Heizvorrichtung 4 umfasst einen Heizleiter 5 und eine elektrische Kontaktstelle 12 mit einem Kontaktbolzen 13. Der Kontaktbolzen 13 erstreckt sich in Einsetzrichtung E des Heizflansches vom Heizleiter 5 ausgehend durch den Schenkel 3 bis oberhalb des Montageflansches 7. Die Kontaktstelle 12 ist bei der dargestellten Ausführung im Montageschenkel 3 in Nähe des Schnittpunktes der Längsachsen des Einsteckschenkels 2 mit dem Montageschenkel 3 angeordnet. Jedoch kann die Kontaktstelle auch an einer beliebigen anderen Position den Montageschenkel 3 durchdringen. Über die Kontaktstelle 12 kann der Heizleiter 5 an eine Spannungsquelle angeschlossen und mittels einer Steuereinheit kontrolliert werden.

Der Heizleiter 5 der in Fig. 1 dargestellten Ausführungsform besteht aus einem einzigen, flachen Heizband, das als ein Mäanderheizband mäanderförmig mit mehreren Heizleiterabschnitten S₁, S₂, S₃, S₄ und S₅ mehrfach zwischen den Befestigungsstellen 6a bzw. 6b an den beiden Schenkeln 2 und 3 hin- und hergeführt ist. Dabei weisen die flachen Randseiten des Mäanderheizbandes in Strömungsrichtung der Ansaugluft. Das Heizband kann aber auch zur Ansaugluft leicht angestellt angeordnet werden. Der Heizleiter 5 weist in jedem Heizleiterabschnitt S₁, S₂, S₃, S₄ und S₅, der sich von einem Befestigungspunkt 6a am Einsteckschenkel 2 zu einem anderen Befestigungspunkt 6b am Montageschenkel 3 erstreckt, eine Knickstelle 14 auf. Die Knickstelle 14 teilt einen Heizleiterabschnitt somit in zwei gerade Teile, die Heizleiterschenkel. An jeder Knickstelle 14 ist das Heizband um etwa 90° abgewinkelt, wodurch es immer senkrecht auf die beiden Schenkel 2 und 3 trifft. Im Strömungsquerschnitt weist der Heizflansch 1 somit einen Querschnitt aus im Wesentlichen parallelen ineinanderliegenden Quadraten unterschiedlicher Seitenlänge auf. Alle diese Quadrate besitzen einen gemeinsamen Eckpunkt, die Stelle an der die beiden Schenkel 2 und 3 miteinander verbunden sind.

In jeder Knickstelle 14 vollzieht sich eine Richtungsänderung des Heizbandes 5 um etwa 90° in einer stetigen Kurve. Die Knickstellen 14 stellen in Fig. 1 also den Wärmeverformungsabschnitt W des Heizleiters 5 dar. Zur Versteifung des Heizleiters 5 weist das Mäanderheizband abschnittsweise Stabilisierungsbereiche SB mit winkelförmigen Sicken 15 auf. Die Sicken 15 erstrecken sich in jedem Heizschenkel des Mäanderheizbandes zwischen einer Befestigungsstelle 6 und einer Knickstelle 14. Im Bereich der Knickstellen 14 und den Abschnitten, die als Umlenkstellen 16 an den Befestigungsstellen 6 der Schenkeln 2 und 3 angebracht sind, ist das Mäanderheizband flach und nicht mit versteifenden Sicken versehen.

An einer Umlenkstelle 16 wird das Heizband um etwa 180° umgelenkt. Die Umlenkung erfolgt durch zweifaches Abwinkeln des Heizbandes um etwa 90°, wobei zwischen den beiden 90°-Winkeln ein kurzer ebener Bereich liegt.

Das eine Ende des Heizleiters 5 ist an einer Befestigungsstelle 6b des Montageschenkels 3 mit einem Ende des Kontaktbolzens 13 der elektrischen Kontaktstelle 12 verbunden. Von dieser Befestigungsstelle 6 erstreckt sich das Heizband mit einem ersten Heizschenkel senkrecht zum Montageschenkel 3 in den Strömungsquerschnitt des Heizflansches, bis es an einer ersten Knickstelle 14 um etwa 90° umgelenkt und senkrecht als ein zweiter Heizschenkel auf den Einsteckschenkel 2 zugeführt wird. Nach einer ersten Umlenkstelle 16 am Einsteckschenkel 2 wird das Mäanderheizband wieder zurück zum Montageschenkel 3 geführt. Dieser Heizleiterabschnitt verläuft vom Verbindungspunkt der beiden Schenkel 2 und 3 parallel zum und weiter entfernt als der erste Abschnitt des Heizleiters 5 vom Kontaktbolzen 13 zur ersten Umlenkstelle 16. Insgesamt besitzt der Heizleiter 5 der Fig. 1 vier Umlenkstellen, zwei an jedem Schenkel, 2 bzw. 3, und fünf in die Durchströmungsfläche des Heizflansches ragende Abschnitte mit jeweils einer Knickstelle 14 und insgesamt zehn Heizschenkel. Schließlich endet das Mäanderheizband in der Befestigungsstelle 6c an der äußeren Stirnseite des sich in Einsetzrichtung E erstreckenden Einsteckschenkels 2.

Die Längen der geraden Abschnitte des Heizleiters 5 nehmen, vom Kontaktbolzen 13 ausgehend, im mäanderförmigen Verlauf sukzessive zu, so dass die Knickstellen 14 der fünf Abschnitte auf einer Linie liegen.

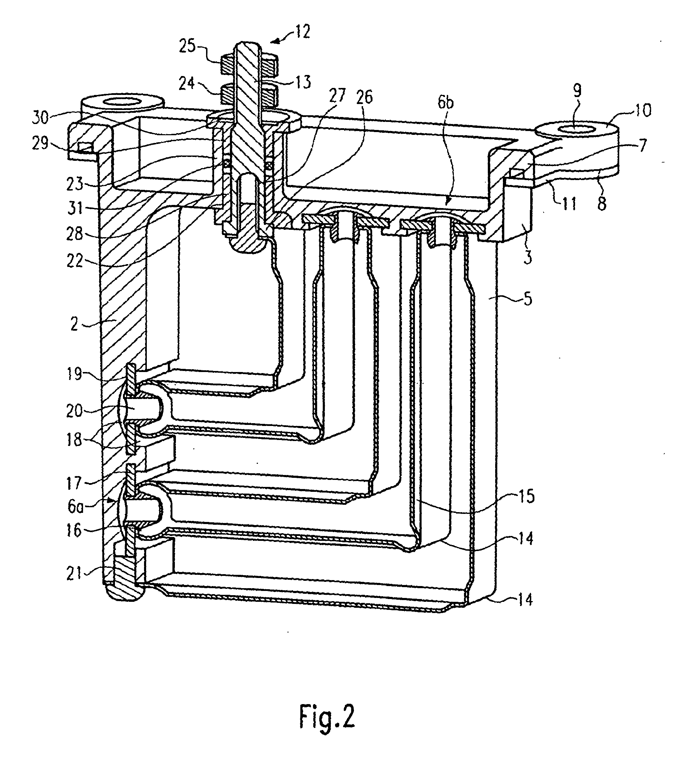

Die Schnittdarstellung der Fig. 2 zeigt einen Vollschnitt des Heizflansches 1 der Fig. 1 und verdeutlicht die Befestigung des Heizleiters 5 an den Schenkeln 2 und 3 über Isolationskörper, hier Isolationsplatten 17, und veranschaulicht, wie die Kontaktstelle 12 der Heizeinrichtung 4 im Montageschenkel 3 angebracht ist. Die Isolationskörper können auch in jeder anderer Form, z.B. als Würfel, Kegel, Stab, ausgestaltet sein.

Die Befestigungsstellen 6a bzw. 6b sind als Aussparungen 18 an den Innenseiten der Schenkel 2 und 3, die zum Strömungsquerschnitt hinzeigen, ausgeformt. Die Aussparungen 18 stellen zunächst eine erste Nut dar, die sich mit einem rechteckigen Profil von den Innenseiten der Schenkel 2 bzw. 3 senkrecht in Richtung der Außenseite der Schenkel erstreckt. Die Aussparungen 18 sind breiter als tief. Die Breite der Nut entspricht mindestens bzw. in etwa der Breite einer Umlenkstelle 16, so dass eine Umlenkstelle 16 in der Aussparung 18 aufnehmbar ist.

Eine zweite Nut, welche die erste Nut hinterschneidet, ist senkrecht zur Aussparung 18 und parallel zu den Längsachsen der Schenkel 2 bzw. 3 ausgeformt und bildet beidseitig angeordnete Führungsflächen 19 der Aussparung 18. Die Führungsflächen 19 sind in einem Abstand zu den Innenseiten der Schenkel 2 bzw. 3 angeordnet. Dadurch bildet die Aussparung 18 mit den Führungsflächen 19 eine im Wesentlichen T-förmige Nut, die eine Art Einsteckschlitz aufweist, in welchen die Isolationsplatte 17 in einer Einsteckrichtung in etwa quer zum Strömungsquerschnitt einsteckbar ist. Weil die Führungsflächen 19 in Richtung der Längsachsen der Schenkel 2, 3 über die Aussparung 18 hinausgeht, wird die Isolationsplatte im eingesteckten Zustand in Richtung der Längsachsen des Schenkels 2 bzw.3 und senkrecht zu den Schenkeln 2 bzw. 3 formschlüssig gehalten.

Jede Umlenkstelle 16 des Heizleiters 5 ist jeweils einer separaten Isolationsplatte 17 bzw. einer einzelnen Befestigungsstelle 6 zugeordnet. Es sind aber auch Ausführungen möglich, bei denen alle Umlenkstellen 16 des Heizleiters 5, die gemeinsam am Einsteckschenkel 2 oder die gemeinsam am Montageschenkel 3 angeordnet liegen, auf einer Isolierplatte 17 für den gesamten Einsteckschenkel 2 oder den gesamten Montageschenkel 3 befestigt sind.

Im Ausführungsbeispiel der Fig. 1 und 2 ist der kurze ebene Bereich der Umlenkstelle 16 über eine Niete 20 mit der Isolationsplatte 17 verbunden. Jedoch kann auch jedes andere Befestigungsmittel, beispielsweise eine Schraube-Mutter-Verbindung, statt der Niete verwendet werden. Die Niete 20 verläuft senkrecht durch die Isolationsplatte 17 und die Umlenkstelle 16 und bildet eine feste Verbindung, wobei der Nietenkopf auf der Seite der Isolationsplatte 17 aufliegt.

Die Isolationsplatte 17 liegt unmittelbar auf einem flachen Abschnitt zwischen zwei in etwa 90°-Knicken der Umlenkstelle 16 auf, und zwar auf der Seite, die von den in den Strömungsquerschnitt ragenden Bereichen des Heizleiters 5 abgewendet ist. Dabei ist die Isolationsplatte 17 breiter als die Umlenkstelle 16.

In Fig. 2 ruht die Isolationsplatte 17 in den Führungsflächen 19 der Aussparung 18. Die Umlenkstelle 16 des Heizleiters 5 ist in dem Teil der Aussparung 18 aufgenommen, der sich von den Innenseiten der Schenkel 2, 3 bis zu der Isolationsplatten 17 erstreckt. Der Nietenkopf ist in dem Teil der Aussparung 18 untergebracht, der auf der gegenüberliegenden Seite der Isolationsplatte 17 liegt.

Die Enden des mäanderförmig verlaufenden Heizleiters 5 sind mit dem Kontaktbolzen 13 der Kontaktstelle 12 bzw. der Stirnseite des Einsteckschenkels 2 verschraubt.

Das eine Ende des Heizleiters 5 schließt bündig mit der Stirnseite des Einsteckschenkels 2 ab, der an seiner Stirnseite eine zentrale Gewindebohrung, koaxial zur Längsachse des Einsteckschenkels 2 aufweist. Eine Befestigungsschraube 21 mit einem Außengewinde erstreckt sich durch eine Öffnung an dem einen Ende des Heizleiters 5 und ist entgegen der Einsteckrichtung E des Heizflansches in die Gewindebohrung eingeschraubt. Somit wird dieses Ende des Heizleiters 5 an der Stirnseite des Einsteckschenkels 2 befestigt und gleichzeitig elektrisch leitend verbunden. Der Stromkreis wird geschlossen, indem der Rahmen mit den beiden Schenkeln 2 und 3 auf Masse gelegt wird.

In vergleichbarer Weise ist auch das andere Ende des Heizleiters 5 an den Kontaktbolzen 13 geschraubt. Die Kontaktstelle 12 ist in einer Aufnahmeöffnung 22 des Montageschenkels 3 positioniert. Die Aufnahmeöffnung 22 des Schenkels 3 ist von einem umlaufenden, erhöhten Rand 23 umgeben, der sich von der Schenkelaußenseite ausgehend entgegen der Einsteckrichtung E erhebt.

Der Kontaktbolzen 13 verläuft co-axial durch die Aufnahmeöffnung 22 von Heizleiter 5 bis über den Rand 23 der Aufnahmeöffnung 22 heraus.

An dem über die Aufnahmeöffnung 22 herausragenden Ende besitzt der Kontaktbolzen 13 ein Außengewinde, auf das zwei Sechskantmuttem 24 und 25 geschraubt sind, die sich nicht berühren. Über die zuerst aufgeschraubte Befestigungsmutter 24 wird der Kontaktbolzen 13 in der Aufnahmeöffnung 22 fixiert. Die andere Kontaktmutter 25 dient erstens zum Anschluss der Heizeinrichtung 4 an eine Spannungsquelle und zweitens zum Anschluss der Heizeinrichtung 4 an eine Steuereinheit. Die Steuereinheit kann entweder in den Heizflansch integriert oder vom Heizflansch autark sein.

Das in den Strömungsquerschnitt ragende Ende des Kontaktbolzens 13 besitzt einen umlaufenden Kragen 26 sowie eine von der Stirnseite ausgehende, zentrierte Gewindebohrung 27. Der Heizleiter 5 ist an diesem Ende mit dem Kontaktbolzen 13 gegen die Einsteckrichtung E des Heizflansches verschraubt und befestigt.

Weil das eine Ende des Heizleiters 5 am Einsteckschenkel 2 auf Masse gelegt ist, muss der Kontaktbolzen 13 von der Aufnahmeöffnung 22 des Montageschenkels 3 elektrisch isoliert sein. Daher ist eine zweiteilige Isolationshülse 28, 29 zwischen Kontaktbolzen 13 und Aufnahmeöffnung 22 eingebracht.

Die Isolationshülse besteht aus zwei Teilhülsen 28 und 29, die jeweils einen endständigen kragenförmige Umrandung besitzen und von entgegengesetzten Seiten in die Aufnahmeöffnung 22 eingebracht werden. Die eine isolierende Teilhülse 28 erstreckt sich von der Innenseite der Aufnahmeöffnung 22 bis zu der Mitte der Öffnung. Die Umrandung der Teilhülse 28 ist somit zwischen der Innenseite des Montageschenkels 3 und dem Kragen 26 des Kontaktbolzens 13 gelagert und dient dort als Isolationsplatte. Die andere Teilhülse 29 reicht vom äußeren Rand bis zur Mitte der Aufnahmeöffnung 22. Die Umrandung dieser Teilhülse 29 liegt auf dem äußeren Rand der Aufnahmeöffnung 22 auf und dient dort als Isolationsplatte für die Befestigungsmutter 24. In Fig. 2 ist zwischen der Umrandung der äußeren Teilhülse 29 und der Befestigungsmutter 24 eine zusätzliche Unterlegscheibe 30 angebracht. Die beiden Teilhülsen 28 und 29 berühren sich in der Mitte der Aufnahmeöffnung 22 nicht, so dass ein ringförmiger Spalt verbleibt. In diesen Spalt ist ein Dichtring 31 eingebracht, der die Aufnahmeöffnung gasdicht verschließt.

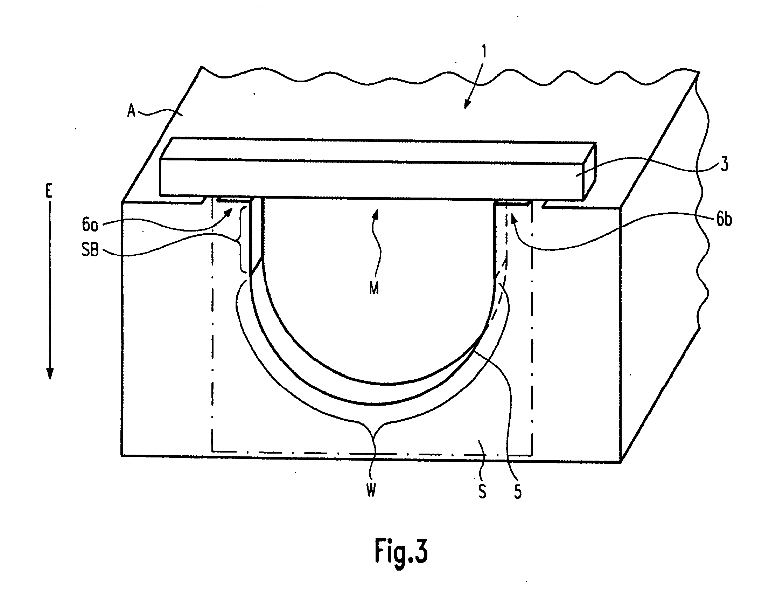

Fig. 3 zeigt eine schematische, perspektivische Darstellung einer zweiten Ausführungsform des erfindungsgemäßen Heizflansches, in der die Ansaugleitung A und deren Montageöffnung M angedeutet sind. Im Folgenden werden der Übersichtlichkeit halber lediglich die Unterschiede zu der oben beschriebenen Ausführungsform erläutert. Für Teile, deren Aufbau und/oder Funktion ähnlich oder identisch von Teilen der vorherigen Ausführungsform ist, werden dieselben Bezugszeichen wie in Fig. 1 verwendet.

Die Ansaugleitung A ist im Bereich des Heizflansches 1 geschnitten dargestellt. Man sieht, dass der Montageschenkel 3 außerhalb der Ansaugleitung A über der Montageöffnung M liegt. Der Heizleiter 5 ist innerhalb der Ansaugleitung A angeordnet ist. Auf diese Weise deckt der Montageschenkel 3 die Montageöffnung M in der Ansaugleitung A ab. Die Befestigung und Abdichtung des erfindungsgemäßen Heizflansches 1 in der Montageöffnung M der Ansaugleitung A wird hier nicht näher erläutert.

Der Heizleiter 5 der Fig. 3 ist bogenförmig ausgestaltet und erstreckt sich von einer ersten Befestigungsstelle 6a durch den Strömungsquerschnitt S bis zu einer zweiten Befestigungsstelle 6b. Die beiden Befestigungsstellen 6a und 6b liegen am Montageschenkel 3 und zwar voneinander beabstandet jeweils an einem der sich gegenüberliegenden Ränder der Montageöffnung M.

Der Strömungsquerschnitt S (durch eine Strichpunktlinie dargestellt) wird an der Montageöffnung M vom Montageschenkel 3 begrenzt und entspricht bei der Ausführungsform der Fig. 3 dem Bereich innerhalb der Ansaugleitung A, den man erhält, wenn man die Montageöffnung M in Einsteckrichtung E parallel auf die gegenüberliegende Wand der Ansaugleitung A projiziert.

Der Heizleiter 5 erstreckt sich durch den Strömungsquerschnitt S und umfasst zwei versteifte Stabilisierungsbereiche SB in Bereich der Befestigungsstellen 6a und 6b und einen Wärmevertormungsbereich W, an dem die Längenausdehnung des Heizleiters 5 stattfindet.

Die Stabilisierungsbereiche SB erstrecken sich im Wesentlichen senkrecht zum Montageschenkel 3 von den Befestigungsstellen 6a bzw. 6b in den Strömungsquerschnitt S hinein. Das Material des bandförmigen Heizleiters S ist im Bereich der Stabilisierungsstellen SB dicker und somit durch den größeren Querschnitt stabiler als im Wärmeverformungsbereich W. Daher wird sich der Heizleiter 5 bei Erwärmen bevorzugt im Verformungsbereich W ausdehnen. Der Wärmeverformungsbereich W des Heizleiters 5 ist als Halbkreis ausgeformt, der die beiden im Strömungsquerschnitt liegenden Enden der Stabilisierungsbereiche SB verbindet, so dass Heizleiter 5 insgesamt eine Bogenform erhält.

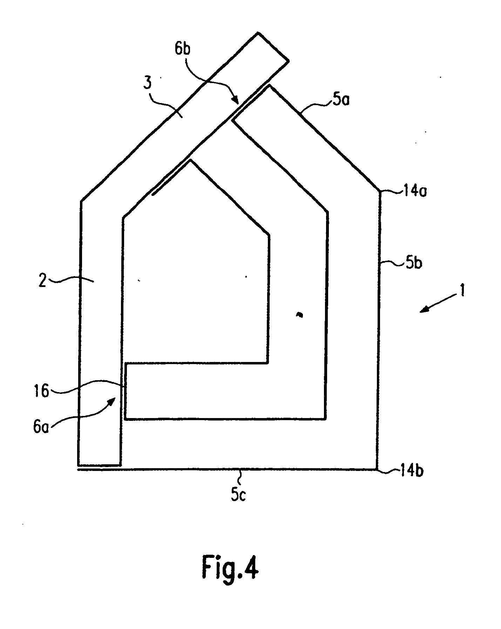

Fig. 4 zeigt eine schematische Seitenansicht einer dritten Ausführungsform des erfindungsgemäßen Heizflansches. Im Folgenden werden der Übersichtlichkeit halber lediglich die Unterschiede zu den oben beschriebenen Ausführungsformen erläutert. Für Teile, deren Aufbau und/oder Funktion ähnlich oder identisch von Teilen der vorherigen Ausführungsform ist, werden dieselben Bezugszeichen wie in den vorangegangenen Figuren verwendet.

Der Rahmen des Heizflansches ist wiederum mit zwei Schenkeln 2 und 3 versehen, die an den Enden unmittelbar miteinander verbunden sind und im Strömungsquerschnitt einen offenen, diesmal stumpfen Winkel bilden.

Der Heizleiter 5 ist als mäandrierendes Heizband ausgebildet, das zwischen Befestigungsstellen 6a bzw. 6b der Halteschenkel 2 und 3 hin- und hergeführt wird. Im Gegensatz zum Heizleiter 5 der Fig. 1 und 2 weist der Heizleiter 5 bei Fig. 4 in einem Abschnitt zwischen einem Befestigungspunkt 6a an dem Einsteckschenkel 2 und einem anderen Befestigungspunkt 6b an dem Montageschenkel 3 zwei Knickstellen 14a und 14b auf. Dadurch besitzt ein Heizleiterabschnitt in dieser Ausführungsform drei Heizschenkel 5a, 5b und 5c. Der erste Schenkel 5a verläuft von der Befestigungsstelle 6b am Montageschenkel 3 bis zum ersten Knick 14a. Der zweite Schenkel 5b bzw. dritte Heizschenkel 5c erstreckt sich zwischen den beiden Knickstellen 14a und 14b und zwischen der Knickstelle 14b und der Befestigungsstelle 6a am Einsteckschenkel 2. Die zwischen den Befestigungsstellen an den beiden Schenkel hin- und hergeführten Abschnitte des Heizleiters 5 bzw. die Heizschenkel der verschiedenen Abschnitte verlaufen wie in Fig. 1 und 2 parallel zueinander.

Von der Befestigungsstelle 6a am Schenkel 3 ragt der Heizleiter senkrecht zum Halteschenkel 3 die Durchströmungsfläche des Heizflansches. An einer ersten Knickstelle 14a wird der Heizleiter 5 umgelenkt. Anschließend wird der Heizleiter 5 parallel zur Fläche des zweiten Halteschenkels 2 weitergeführt, bis er an einer zweiten Knickstelle 14b um 90° umgelenkt wird und schließlich senkrecht auf die Fläche des zweiten Schenkels 2 trifft.

Nach einer ersten Umlenkstelle 16 wird der Heizleiter 5 parallel zum ersten, in die Strömungsfläche ragenden Heizleiterabschnitt, zurück zum ersten Schenkel 2 geführt. Insgesamt umfasst der Heizleiter 5 der Fig. 4 zwei Umlenkstellen, eine an jedem Schenkel 2, 3 und folglich drei in die Durchströmungsfläche ragende Heizleiterabschnitte mit jeweils zwei Knickstellen 14a und 14b und drei Heizschenkeln.

Fig. 4 verdeutlicht, dass die Knickstellen 14a bzw. 14b, der in die Ansaugluft ragenden Bereiche des Heizleiters 5, auf einer Gerade liegen.

Die übrige Ausgestaltung der Ausführungsform der Fig. 4, beispielsweise die Befestigung des Heizleiters am Rahmen, kann der Fig. 1 entsprechen.

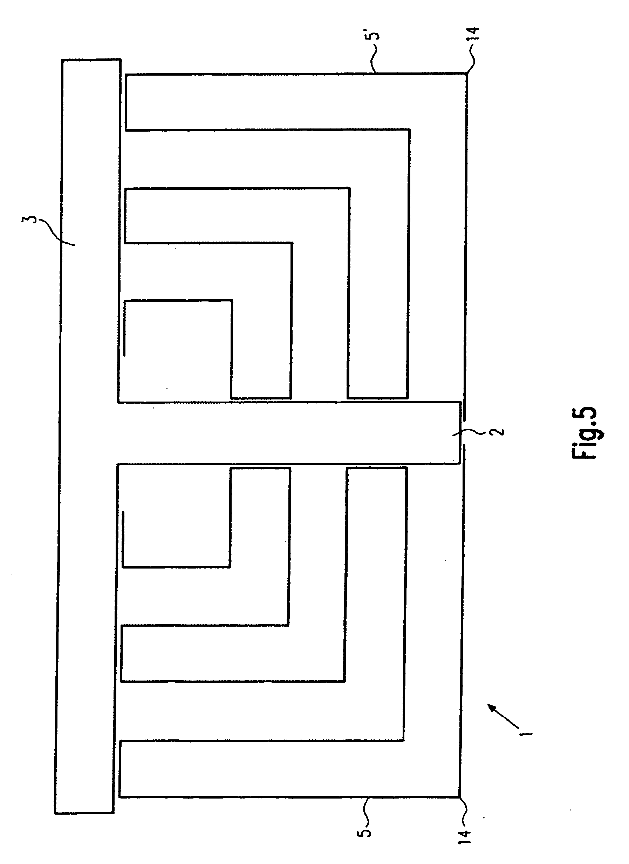

Fig. 5 zeigt die schematische Seitenansicht einer vierten Ausführungsform. Wiederum wird nur auf die Unterschiede zu den oben beschriebenen Ausführungsformen eingegangen. Für Teile, deren Aufbau und/oder Funktion ähnlich oder identisch von Teilen der vorherigen Ausführungsformen ist, werden die gleichen Bezugszeichen wie in den vorangegangenen Figuren verwendet.

Der Rahmen des Heizflansches ist diesmal mit einem im Wesentlichen T-förmigen Querschnitt ausgestaltet. Dabei sind die Längsachsen der beiden Schenkel 2 und 3 in etwa senkrecht zueinander angeordnet und das eine Ende des Einsteckschenkels 2 ist unmittelbar in etwa mit der Mitte des Montageschenkel 3 verbunden. Somit spannen die beiden Schenkel 2 und 3 einen Heizflansch mit zwei nebeneinander liegenden Strömungsquerschnitten auf.

In jedem der beiden Strömungsquerschnitte erstreckt sich jeweils ein separater Heizleiter 5 und 5' als mäandrierendes Heizband zwischen Befestigungsstellen 6 an den Schenkeln 2 und 3 hin und her. Die beiden Heizleiter 5 und 5' besitzen in jedem Abschnitt zwischen einem Befestigungspunkt 6a an dem Einsteckschenkel 2 und einem anderen Befestigungspunkt 6b an dem Montageschenkel 3 eine Knickstelle 14, an der eine Umlenkung um etwa 90° stattfindet.

Bei dieser Ausführung ist es möglich, die beiden Heizleiter 5 unabhängig voneinander zu beheizen, so dass der Wärmeübergang vom Heizflansch ,1 an die Ansaugluft sehr genau gesteuert werden kann.

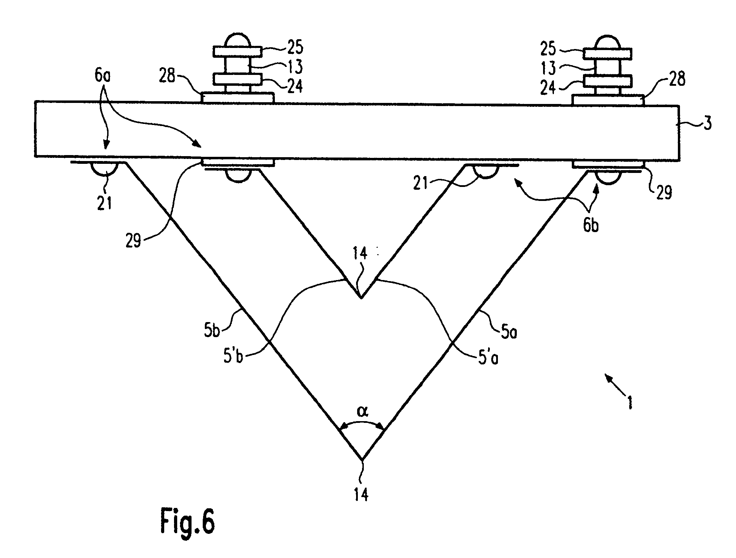

Fig. 6 zeigt die schematische Seitenansicht einer fünften Ausführungsform des erfindungsgemäßen Heizflansches. Wiederum wird nur auf die Unterschiede zu den oben beschriebenen Ausführungsformen eingegangen. Für gleiche Teile, deren Aufbau und/oder Funktion ähnlich oder identisch von Teilen der vorherigen Ausführungsform ist, werden die gleichen Bezugszeichen wie in den vorangegangenen Figuren verwendet.

Der Heizflansch der Fig. 6 besitzt im Unterschied zu den vorangegangenen Ausführungsformen lediglich einen Halteschenkel, den Montageschenkel 3. An dem Montageschenkel 3 sind zwei parallel verlaufende, unabhängige Heizleiter 5 und 5' angebracht, die sich zwischen den Befestigungsstellen 6a und 6b durch den Strömungsquerschnitt des Heizflansches 1 erstrecken. Im Unterschied zu den vorangegangenen Ausführungsformen liegen die Befestigungsstellen 6a und 6b beide auf dem einen Montageschenkel 3.

Selbstverständlich können auch mehr als zwei Heizelemente 5 an Montageschenkeln 3 angebracht sein. Der Vorteil einer Ausführung mit mehreren, unabhängigen Heizleitern 5 ist, dass eine schaltbare Steuerung zur besseren Anpassung der Heizleistung möglich ist. Die Ausführungsform der Fig. 6 kann alternativ mit einem einzelnen Heizmäander mit Umlenkstellen, wie in den vorangestellten Ausführungen, ausgebildet sein.

Die beiden Heizleiter 5 und 5' weisen jeweils zwei gerade Heizschenkel 5a', 5b' bzw. 5a, 5b auf, die an einer Knickstelle 14 den Winkel α bilden, wodurch sich bei jedem Heizleiter zwei in etwa rechtwinkelig zueinander stehende Heizschenkel bilden. Bei der Ausführungsform der Fig. 6 erzeugen die Längsachse des Montageschenkels 3 sowie die beiden Heizschenkel 5a, 5b bzw. 5a', 5b' der Heizleiter 5 und 5' zwischen den Befestigungsstellen 6a und 6b eine erfindungsgemäße stabile Dreiecksstruktur, wobei der Heizleiter 5' eine kleinere Dreiecksfläche aufspannt, da er kürzere Heizschenkel als der andere Heizleiter 5 besitzt. Die derart aufgespannten Dreiecke sind im Wesentlichen rechtwinkelige Dreiecke, deren rechter Winkel jeweils an der Knickstelle 14 liegt.

Abermals liegen die Knickstellen der Heizleiter 5 und 5' auf einer Linie, welche in diesem Fall in etwa die Mittelsenkrechte des Montageschenkels 3 ist. Die Befestigung der beiden Heizleiter 5 und 5' erfolgt im Ausführungsbeispiel der Fig. 5 in analoger Weise zu den Enden des Mäanderheizbandes der Fig. 1 und 2.

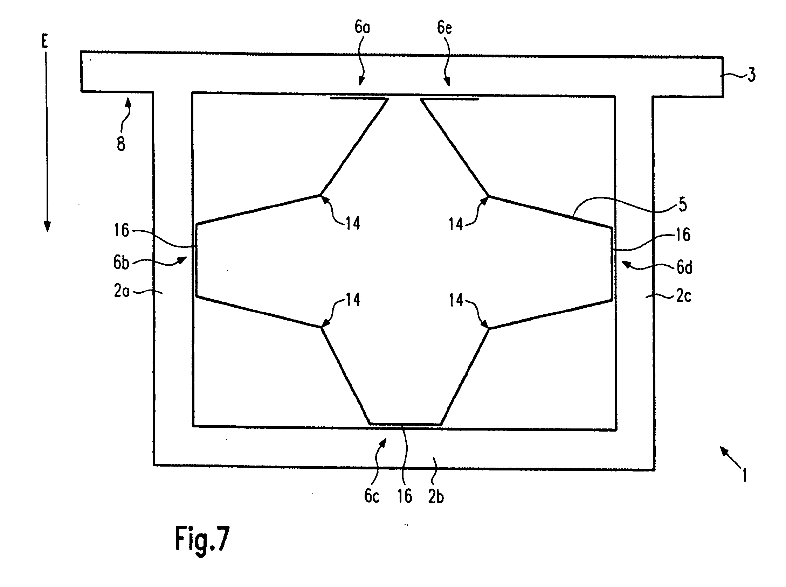

Die Fig. 7 zeigt eine schematische Seitenansicht einer sechsten Ausführungsform mit einem geschlossenen Rahmen. Der Übersichtlichkeit halber wird wiederum nur auf die Unterschieden zu den oben beschriebenen Ausführungsformen eingegangen. Für Teile, deren Aufbau und/oder Funktion ähnlich oder identisch von Teilen der vorherigen Ausführungsformen ist, werden die gleichen Bezugszeichen wie in den vorangegangenen Figuren verwendet.

Der im Wesentlichen rechteckige Rahmen des Heizflansches der Fig. 7 besitzt einen Strömungsquerschnitt, der von vier Halteschenkeln 2a, 2b, 2c und 3 eingegrenzt ist. Der als Montageschenkel ausgebildete Halteschenkel 3 erstreckt sich über die Verbindungsstellen mit den in Einsteckrichtung verlaufenden Halteschenkel 2a und 2c hinaus. Auf diese Weise erhält der Montageschenkel 3, wie bereits in Fig. 1 beschrieben, einen Auflageabsatz 8. Die geschlossene Rahmenform ist jedoch nicht auf eine rechteckige Ausführung mit vier Schenkeln begrenzt, sondern kann in Gestalt jedes beliebigen Vielecks gefertigt und auch abschnittsweise unterbrochen sein.

In dem Strömungsquerschnitt ist ein Heizleiter 5 an allen vier Halteschenkeln 2a, 2b, 2c und 3 befestigt. Das eine Ende des Heizleiters ist an dem Montageschenkel 3 befestigt. Von dort aus erstreckt es sich durch den Strömungsquerschnitt zu einer nächsten Befestigungsstelle am Einsteckschenkel 2a, der senkrecht zum Montageschenkel 3 verläuft. Auf diese Weise erhält der Heizflansch der Fig. 7 eine erste Dreiecksstruktur, die von den Längsachsen der Halteschenkel 3 und 2a sowie der Geraden durch die Befestigungsstellen 6a und 6b gebildet wird.

Der Heizleiter 5 besitzt im Heizleiterabschnitt zwischen der ersten Befestigungsstelle 6a am Montageschenkel 3 und der zweiten Befestigungsstelle 6b am Einsteckschenkel 2a eine Knickstelle 14, wodurch dieser erste Heizleiterabschnitt in zwei Heizschenkel aufgeteilt wird, was dem Heizleiters des Ausführungsbeispiels der Fig. 1 ähnelt. Im Unterschied zu Fig. 1 bilden die beiden Heizschenkel bei Fig. 7 aber einen stumpfen Winkel. Die Erfindung ist jedoch nicht auf einer Ausgestaltung mit geknickten Heizleiterabschnitten zu beschränken, sondern es können beliebige Heizleiter eingesetzt werden, die einen kontrollierten Längenausgleich basierend auf der Heizleiterform gewährleisten. Dies umschließt unter anderem auch gebogene Heizleiterabschnitte oder Abschnitte mit kleinerem Querschnitt jeweils ohne Knick.

Von der zweiten Befestigungsstelle 6b am Einsteckschenkel 2a erstreckt der Heizleiter 5 anschließend erneut durch den Strömungsquerschnitt zu einer dritten Befestigungsstelle 6c am dritten Halteschenkel 2b, welcher parallel zum Montageschenkel 3 und senkrecht zum Einsteckschenkel 2a angeordnet ist. Wiederum weist der zweite Heizleiterabschnitt zwischen der zweiten Befestigungsstelle 6b und der dritten Befestigungsstelle 6c eine stumpfwinkelige Knickstelle 14 und somit zwei weitere Heizschenkel auf.

In entsprechender Weise verläuft der Heizleiter 5 in einen weiteren Abschnitt mit einer Knickstelle 14 von der dritten Befestigungsstelle 6c zu einer vierten Befestigungsstelle 6d am vierten Halteschenkel, der wiederum parallel zur Einsteckrichtung verläuft und endet schließlich an einer fünften Befestigungsstelle 6e, die wie das andere Ende des Heizleiters 5 am Montageschenkel 3 angeordnet ist.

Der Heizleiter 5 der Ausführung der Fig. 7 weist somit vier Heizleiterabschnitte auf, die jeweils mit einer Knickstelle 14 sowie zwei Heizschenkel geformt sind. Insgesamt entstehen vier Dreiecksstrukturen, welche von den Längsachsen aneinandergrenzender Halteschenkel sowie der Geraden durch die aufeinanderfolgenden Befestigungspunkte eines Heizleiterabschnittes gebildet werden.

Bei der Ausführung der Fig. 7 kann der umlaufende Heizleiter 5 auch in mehrere, unabhängige Heizkreise unterteilt werden, indem beispielsweise die Umlenkstelle 16 der Befestigungsstelle 6c am Rahmen (2a, 2b, 2c, 3) auf Masse liegt und die Befestigungsstellen 6a bis 6e gegenüber dem Montageschenkel 3 isoliert und mit separaten Kontaktstellen versehen sind. Auf diese Weise kann entweder nur der Abschnitt von der ersten Befestigungsstelle 6a bzw. der fünften Befestigungsstelle 6e bis zur dritten Befestigungsstelle 6c oder beide Abschnitte beheizt werden.

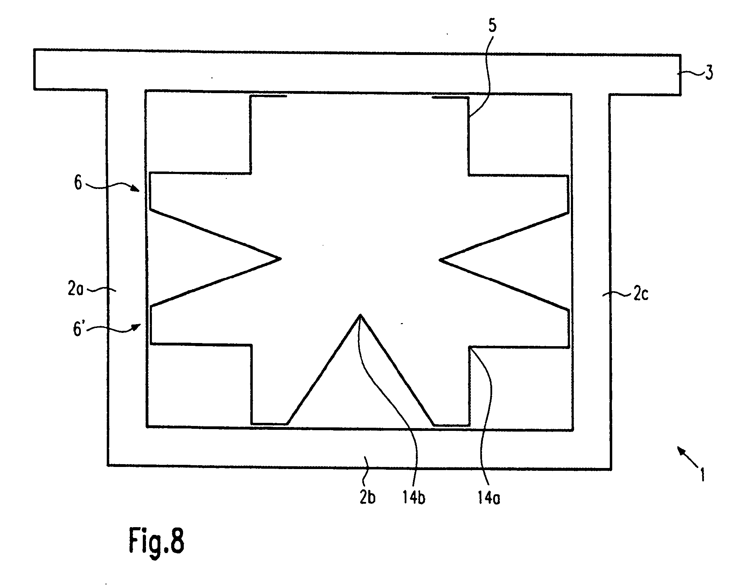

Fig. 8 zeigt eine weitere schematische Seitenansicht gemäß einer letzten Ausführungsform. Abermals wird nur auf die Unterschiede zu den oben beschriebenen Ausführungsformen eingegangen, wobei für Teile, deren Aufbau und/oder Funktion ähnlich oder identisch von Teilen der vorherigen Ausführungsform ist, der Übersichtlichkeit halber die gleichen Bezugszeichen wie in den vorangegangenen Figuren verwendet werden.

Die Ausführung der Fig. 8 ist eine Modifikation der Ausführungsform der Fig. 7. In beiden Abbildungen besitzt der Heizflansch einen geschlossenen Rahmen mit vier Halteschenkeln 2a, 2b, 2c und 3 sowie einen im Strömungsquerschnitt umlaufenden Heizleiter 5, der ausgehend vom Montageschenkel 3 nacheinander an den anderen Schenkeln 2a, 2b und 2c befestigt ist, bevor er wieder am Montageschenkel 3 endet. Im Unterschied zur Fig. 6 findet bei der Ausführung der Fig. 8 an den Knickstellen der Heizleiterabschnitte, die zwischen zwei Halteschenkeln liegen, eine Umlenkung um etwa 90° statt. Femer weist der Heizflansch der Fig. 8 an den Halteschenkeln 2a, 2b und 2c nicht nur jeweils eine, sondern zwei Befestigungsstellen auf, so dass der Heizleiter 5 nicht mit jedem Heizleiterabschnitt zu einem anderen Halteschenkel geführt wird.

Der Heizleiter 5 gemäß dieser Ausführungsform besitzt drei weitere Heizleiterabschnitte, die sich zwischen den beiden Befestigungsstellen an den Halteschenkeln 2a, 2b und 2c in den Strömungsquerschnitt erstrecken.

Diese drei zusätzlichen Heizleiterabschnitte verlaufen in analoger Weise zur Ausführungsform der Fig. 6, bei der ein Heizleiterabschnitt mit zwei Heizschenkeln und einer Knickstelle zwischen zwei Befestigungsstellen verläuft, die beide auf demselben Halteschenkel liegen.

Die obigen Ausführungsformen stellen lediglich beispielhafte Ausgestaltungen dar, deren Merkmale beliebig kombiniert und modifiziert werden können. So können beispielsweise die Heizleiter 5 der Fig. 3 bis 8 auch über Befestigungsplatten 17 in Aussparung 18 der Halteschenkel 2 und 3 eingeführt werden. Femer ist es beispielsweise auch nicht notwendig, den Heizleiter 5 der Fig. 1 und 2 als Mäanderheizband zu fertigen, sondern mehrere unabhängig voneinander betreibbare Heizleiter 5, wie in Fig. 6 dargestellt, zu betreiben oder umgekehrt die beiden unabhängigen Heizleiter 5 und 5' der Fig. 6 zu einem Heizmäander zu verbinden.

## Patentansprüche

1. Heizflansch (1) zur Erwärmung eines durch einen Strömungsquerschnitt (S) strömenden Gasstromes, wobei der Heizflansch (1) in eine Ansaugleitung (A) einer Verbrennungskraftmaschine ein- oder zwischensetzbar ausgestaltet ist und wenigstens einen Heizleiter (5), der sich durch den Strömungsquerschnitt (S) von einer Befestigungsstelle (6a) zu einer unmittelbar folgenden weiteren Befestigungsstelle (6b) am Heizflansch (1) erstreckt, sowie einen Halteschenkel (2) aufweist, der mit wenigstens einer der Befestigungsstellen (6a) versehen ist, **dadurch gekennzeichnet, dass** sich der Heizleiter (5) bogenförmig von der einen, am Rand des Strömungsquerschnittes (S) angeordneten Befestigungsstelle (6a) im Wesentlichen frei durch den Strömungsquerschnitt (S) zu der weiteren, ebenfalls am Rand des Strömungsquerschnittes (S) und an dem einen Halteschenkel (2) angeordneten Befestigungsstelle (6b) erstreckt.

2. Heizflansch (1) nach Anspruch 1, **dadurch gekennzeichnet, dass** sich mindestens ein weiterer Heizleiter (5) durch den Strömungsquerschnitt (S) erstreckt.

3. Heizflansch (1) nach Anspruch 1 oder 2, **dadurch gekennzeichnet, dass** der Heizleiter (5) als ein Heizmäander mit mehreren zwischen Befestigungsstellen (6a, 6b) angeordneten Heizleiterabschnitten (5₁, 5₂, 5₃) ausgebildet ist und sich mäanderförmig wiederholt durch den Strömungsquerschnitt (S) erstreckt.

4. Heizflansch (1) nach einem der oben genannten Ansprüche, **dadurch gekennzeichnet, dass** der wenigstens eine Heizleiter (5) mindestens zwei gerade Heizschenkel (5a, 5b) aufweist, die mindestens einen Winkel α bilden.

5. Heizflansch (1) nach Anspruch 4, **dadurch gekennzeichnet, dass** der Winkel α in etwa der rechte Winkel ist.

6. Heizflansch (1) nach einem der oben genannten Ansprüche, **dadurch gekennzeichnet, dass** der wenigstens eine Heizleiter (5) als ein elektrischer, im Wesentlichen bandförmiger Heizleiter (5) ausgeformt ist.

7. Heizflansch (1) nach einem der oben genannten Ansprüche, **dadurch gekennzeichnet, dass** die Heizleiterabschnitte (5₁, 5₂, 5₃) eines Heizleiters (5) und/oder verschiedener Heizleiter (5, 5') im Wesentlichen parallel im Strömungsquerschnitt angeordnet sind.

8. Heizflansch (1) nach einem der oben genannten Ansprüche, **dadurch gekennzeichnet, dass** die Heizleiterabschnitte (5₁, 5₂, 5₃) eines Heizleiters (5) und/oder verschiedener Heizleiter (5, 5') unterschiedliche Längen aufweisen und ineinander geschachtelt im Strömungsquerschnitt (S) angeordnet sind.

9. Heizflansch (1) nach einem der oben genannten Ansprüche, **dadurch gekennzeichnet, dass** der Heizleiter (5) einen sich im Wesentlichen frei zwischen den Befestigungsstellen (6a, 6b) erstreckenden Wärmeverformungsabschnitt (W) im Strömungsquerschnitt (S) aufweist, dessen Verformbarkeit bei Erwärmen des Heizleiters (5) größer als die Verformbarkeit seiner Umgebung ist.

10. Heizflansch (1) nach Anspruch 9, **dadurch gekennzeichnet, dass** der Wärmeverformungsabschnittes (W) einen kleineren Querschnitt als seine Umgebung aufweist.

11. Heizflansch (1) nach Anspruch 9 oder 10, **dadurch gekennzeichnet, dass** die Längsachse des Heizleiters (5) im Wärmeverformungsabschnitt (W) einen Richtungswechsel aufweist.

12. Heizflansch (1) nach einem der Ansprüche 9 bis 11, **dadurch gekennzeichnet, dass** der wenigstens eine Heizleiter (5) zwischen den Befestigungsstellen (6a, 6b) mindestens einmal an einer Knickstelle (14) abgewinkelt ist.

13. Heizflansch (1) nach Anspruch 12, **dadurch gekennzeichnet, dass** die Knickstellen (14) der durch den Strömungsquerschnitt (S) verlaufenden Heizleiterabschnitte (5₁, 5₂, 5₃) eines Heizleiters (5) und/oder verschiedener Heizleiter (5, 5') im Wesentlichen auf einer Linie liegen.

14. Heizflansch (1) nach einem der oben genannten Ansprüche, **dadurch gekennzeichnet, dass** der Heizleiters (5) Stabilisierungsbereiche (SB) aufweist, die zumindest teilweise mit Versteifungsprofilen (15) versehen sind, durch welche die Biegesteifigkeit in Längsrichtung des Heizleiters (5) erhöht ist.

15. Heizflansch (1) nach Anspruch 14, **dadurch gekennzeichnet, dass** ein im Wesentlichen bandförmiger Heizleiter (5) mindestens eine sich in Längsrichtung des Heizleiters (5) erstreckende Sicke (15) aufweist.

16. Heizflansch (1) nach einem der oben genannten Ansprüche, **dadurch gekennzeichnet, dass** der Heizleiter (5) an den Befestigungsstellen (6a, 6b) mit dem jeweiligen Halteschenkel (2, 3) im Wesentlichen starr verbunden ist.

17. Heizflansch (1) nach einem der oben genannten Ansprüche, **dadurch gekennzeichnet, dass** an jeder Befestigungsstelle (6) eines Halteschenkels (2 ,3) zwischen dem Heizleiter (5) und dem jeweiligen Halteschenkel (2 ,3) ein Isolationskörper (17) vorgesehen ist und als Befestigungskörper dient, durch den der Heizleiter (5) am jeweiligen Halteschenkel (2, 3) befestigt ist.

18. Heizflansch (1) nach einem der oben genannten Ansprüche, **dadurch gekennzeichnet, dass** der Isolationskörper (17) über ein Befestigungsmittel (20) mit dem Heizleiter (5) verbunden ist.

19. Heizflansch (1) nach einem der oben genannten Ansprüche, **dadurch gekennzeichnet, dass** der Heizleiter (5) und die mit dem Heizleiter (5) verbundenen Isolationskörper (17) als eine einstückig handhabbare Einheit (5, 17) ausgestaltet sind.

20. Heizflansch (1) nach Anspruch 19, **dadurch gekennzeichnet, dass** die einstückig handhabbare Einheit (5, 17) wiederholt von den Befestigungsstellen (6) der Halteschenkel (2, 3) lösbar ist.

21. Heizflansch (1) nach einem der oben genannten Ansprüche, **dadurch gekennzeichnet, dass** an der Befestigungsstelle (6) eine Aussparung (18) so ausgeformt ist, dass der Isolationskörper (17) in der Aussparung (18) aufgenommen ist.

22. Heizflansch (1) nach einem der oben genannten Ansprüche, **dadurch gekennzeichnet, dass** der Isolationskörper (17) in der Aussparung (18) der Befestigungsstelle (6) in einer Einsteckrichtung, die im Wesentlichen senkrecht zum Strömungsquerschnitt (S) verläuft, kraftschlüssig und in den beiden senkrechten zur Einsteckrichtung verlaufenden Raumachsen formschlüssig gehalten ist.

23. Heizflansch (1) nach einem der oben genannten Ansprüche, **dadurch gekennzeichnet, dass** der Isolationskörper (17) als eine Isolationsplatte (17) geformt ist.

24. Heizflansch (1) nach einem der oben genannten Ansprüche, **dadurch gekennzeichnet, dass** zwei Halteschenkel (2, 3) einen offenen Rahmen (2, 3) in Form eines Winkels bilden.

25. Heizflansch (1) nach einem der oben genannten Ansprüche, **dadurch gekennzeichnet, dass** die Längsachsen der Halteschenkel (2, 3) im Wesentlichen senkrecht zueinander angeordnet sind.

26. Heizflansch (1) nach einem der oben genannten Ansprüche, **dadurch gekennzeichnet, dass** die Halteschenkel (2, 3) in einer zum Strömungsquerschnitt (S) parallelen Ebene einen im Querschnitt im Wesentlichen L-förmigen Rahmen ausbilden.

27. Heizflansch (1) nach einem der oben genannten Ansprüche, **dadurch gekennzeichnet, dass** mindestens drei Halteschenkel (2a, 2b, 2c, 3) des Heizleiters einen im Wesentlichen geschlossenen Rahmen (2a, 2b, 2c, 3) bilden.

28. Heizflansch (1) nach einem der oben genannten Ansprüche, **dadurch gekennzeichnet, dass** ein Halteschenkel (2) des Rahmens (2, 3) einstückig mit einem Montageflansch (7) ausgebildet ist.

29. Heizflansch (1) nach Anspruch 28, **dadurch gekennzeichnet, dass** im montierten Zustand des Heizflansches (1) zwischen dem Montageflansch (7) und der Ansaugleitung ein Dichtmittel (11) angeordnet ist.

30. Heizflansch (1) nach Anspruch 24, **dadurch gekennzeichnet, dass** der Rahmen (2, 3) als Gussteil gefertigt ist.

## Claims

1. A heating flange (1) for heating a flow of gas as it flows through a cross-section of flow (S), wherein the heating flange (1) is formed such that it can be inserted or interposed in an intake line (A) of an internal combustion engine and has at least one heat conductor (5), which extends through the cross-section of flow (S) from a mounting point (6a) to an immediately following further mounting point (6b) on the heating flange (1), as well as a retaining leg piece (2) that is provided with at least one of the mounting points (6a), **characterised in that** the heat conductor (5) extends in curved form from the one mounting point (6a) arranged on the edge of the cross-section of flow (S) substantially freely through the cross-section of flow (S) to the other mounting point (6b) likewise arranged on the edge of the cross-section of flow (S) and on the one retaining leg piece (2).

2. The heating flange (1) according to Claim 1, **characterised in that** at least one additional heat conductor (5) extends through the cross-section of flow (S).

3. The heating flange (1) according to Claim 1 or 2, **characterised in that** the heat conductor (5) is formed as a heating meander with multiple heat conductor sections (5₁, 5₂, 5₃) arranged between mounting points (6a, 6b) and repeatedly extends through the cross-section of flow (S) in a meandering form.

4. The heating flange (1) according to one of the above-mentioned Claims, **characterised in that** the at least one heat conductor (5) has at least two straight heating leg pieces (5a, 5b), which form at least one angle α.

5. The heating flange (1) according to Claim 4, **characterised in that** the angle α is approximately a right angle.

6. The heating flange (1) according to one of the above-mentioned Claims, **characterised in that** the at least one heat conductor (5) is formed as an electric, essentially ribbon-shaped heat conductor (5).

7. The heating flange (1) according to one of the above-mentioned Claims, **characterised in that** the heat conductor sections (5₁, 5₂, 5₃) of a heat conductor (5) and / or various heat conductors (5, 5') are arranged so that they are essentially parallel in the cross-section of flow.

8. The heating flange (1) according to one of the above-mentioned Claims, **characterised in that** the heat conductor sections (5₁, 5₂, 5₃) of a heat conductor (5) and / or various heat conductors (5, 5') are of various lengths and arranged so that they are nested in one another in the cross-section of flow (S).

9. The heating flange (1) according to one of the above-mentioned Claims, **characterised in that** the heat conductor (5) has a heat-deformation section (W) in the cross-section of flow (S) that extends essentially freely between the mounting points (6a, 6b), with said heat-deformation section (W) having greater ductility when the heat conductor (5) is heated than the ductility of its surroundings.

10. The heating flange (1) according to Claim 9, **characterised in that** the heat-deformation section (W) has a smaller cross-section than does its surroundings.

11. The heating flange (1) according to Claim 9 or 10, **characterised in that** the longitudinal axis of the heat conductor (5) has a change of direction in the heat-deformation section (W).

12. The heating flange (1) according to one of Claims 9 to 11, **characterised in that** the at least one heat conductor (5) between the mounting points (6a, 6b) is angled at least one time at a kink (14).

13. The heating flange (1) according to Claim 12, **characterised in that** the kinks (14) of the heat conductor sections (5₁, 5₂, 5₃) of a heat conductor (5) and / or various heat conductors (5, 5') that run through the cross-section of flow (S) essentially lie on a line.

14. The heating flange (1) according to one of the above-mentioned claims, **characterised in that** the heat conductor (5) has stabilisation areas (SB), which, at least to some extent, are given stiffening profiles (15) by means of which the flexural rigidity is increased along the length of the heat conductor (5).

15. The heating flange (1) according to Claim 14, **characterised in that** a heat conductor (5) that is essentially ribbon-shaped has at least one bead (15) that extends lengthwise along the heat conductor (5).

16. The heating flange (1) according to one of the above-mentioned Claims, **characterised in that** the heat conductor (5) is essentially rigidly connected to the respective retaining leg piece (2, 3) at the mounting points (6a, 6b).

17. The heating flange (1) according to one of the above-mentioned Claims, **characterised in that** there is an insulator (17) provided at each mounting point (6) of a retaining leg piece (2, 3) between the heat conductor (5) and the respective retaining leg piece (2, 3), with said insulator (17) serving as a mounting body by means of which the heat conductor (5) is attached on the respective retaining leg piece (2, 3).

18. The heating flange (1) according to one of the above-mentioned Claims, **characterised in that** the insulator (17) is connected to the heat conductor (5) via a fixing means (20).

19. The heating flange (1) according to one of the above-mentioned Claims, **characterised in that** the heat conductor (5) and the insulators (17) connected to the heat conductor (5) are designed as a unit (5, 17) that can be handled in one piece.

20. The heating flange (1) according to Claim 19, **characterised in that** the unit (5, 17) that can be handled in one piece is repeatedly detachable from the mounting points (6) of the retaining leg pieces (2, 3).

21. The heating flange (1) according to one of the above-mentioned Claims, **characterised in that** a recess (18) is formed at the mounting point (6) in such a way that the insulator (17) is held in the recess (18).

22. The heating flange (1) according to one of the above-mentioned Claims, **characterised in that** in the recess (18) of the mounting point (6) the insulator (17) is held non-positive in an insertion direction, which runs essentially perpendicular to the cross-section of flow (S), and with a positive fit in the two axes in space that are perpendicular to the insertion direction.

23. The heating flange (1) according to one of the above-mentioned Claims, **characterised in that** the insulator (17) is formed as an insulation plate (17).

24. The heating flange (1) according to one of the above-mentioned Claims, **characterised in that** two retaining leg pieces (2, 3) form an open frame (2, 3) in the shape of an angle.

25. The heating flange (1) according to one of the above-mentioned Claims, **characterised in that** the longitudinal axes of the retaining leg pieces (2, 3) are arranged essentially perpendicular to one another.

26. The heating flange (1) according to one of the above-mentioned Claims, **characterised in that** the retaining leg pieces (2, 3) form an essentially L-shaped frame in cross-section in a plane parallel to the cross-section of flow (S).

27. The heating flange (1) according to one of the above-mentioned Claims, **characterised in that** at least three retaining leg pieces (2a, 2b, 2c, 3) of the heating flange form an essentially closed frame (2a, 2b, 2c, 3).

28. The heating flange (1) according to one of the above-mentioned Claims, **characterised in that** a retaining leg piece (2) of the frame (2, 3) is formed as a single piece with a mounting flange (7).

29. The heating flange (1) according to Claim 28, **characterised in that** a sealing material (11) is arranged between the mounting flange (7) and the intake line when the heating flange (1) is in the mounted state.

30. The heating flange (1) according to Claim 24, **characterised in that** the frame (2, 3) is produced as a cast part.

## Revendications

1. Bride d'échauffement (1) pour le réchauffement d'un courant gazeux passant par une coupe transversale d'écoulement (S), la bride d'échauffement (1) étant conçue de manière à pouvoir être insérée ou intercalée dans une conduite d'admission (A) d'un moteur à combustion interne et comportant au moins un conducteur chauffant (5) qui s'étend à travers la coupe transversale d'écoulement (S) depuis un point de fixation (6a) jusqu'à un autre point de fixation (6b) directement consécutif sur la bride d'échauffement (1), ainsi qu'une branche de maintien (2) comportant au moins un des points de fixation (6a), **caractérisée en ce que** le conducteur chauffant (5) s'étend en forme de courbe, sensiblement librement à travers la coupe transversale d'écoulement (S), depuis l'un des points de fixation (6a), disposé sur le bord de la coupe transversale d'écoulement (S), jusqu'à l'autre point de fixation (6b) disposé également sur le bord de la coupe transversale d'écoulement (S) et sur ladite branche de maintien (2).

2. Bride d'échauffement (1) selon la revendication 1, **caractérisée en ce qu'**au moins un autre conducteur chauffant (5) s'étend à travers la coupe transversale d'écoulement (S).

3. Bride d'échauffement (1) selon la revendication 1 ou 2, **caractérisée en ce que** le conducteur chauffant (5) est conçu sous forme de méandre chauffant avec plusieurs segments de conducteur chauffant (5₁, 5₂, 5₃) disposés entre des points de fixation (6a, 6b) et s'étend de manière répétée en méandres à travers la coupe transversale d'écoulement (S).

4. Bride d'échauffement (1) selon l'une quelconque des revendications précédentes, **caractérisée en ce que** ledit au moins un conducteur chauffant (5) comporte au moins deux branches d'échauffement (5a, 5b) droites formant au moins un angle α.

5. Bride d'échauffement (1) selon la revendication 4, **caractérisée en ce que** l'angle α est sensiblement un angle droit.

6. Bride d'échauffement (1) selon l'une quelconque des revendications précédentes, **caractérisée en ce que** ledit au moins un conducteur chauffant (5) est conçu sous la forme d'un conducteur chauffant (5) électrique sensiblement en forme de bande.

7. Bride d'échauffement (1) selon l'une quelconque des revendications précédentes, **caractérisée en ce que** les segments (5₁, 5₂, 5₃) d'un conducteur chauffant (5) et/ou de différents conducteurs chauffants (5, 5') sont disposés sensiblement parallèlement dans la coupe transversale d'écoulement.

8. Bride d'échauffement (1) selon l'une quelconque des revendications précédentes, **caractérisée en ce que** les segments (5₁, 5₂, 5₃) d'un conducteur chauffant (5) et/ou de différents conducteurs chauffants (5, 5') ont des longueurs différentes et sont disposés dans la coupe transversale d'écoulement (S) en étant emboîtés les uns dans les autres.

9. Bride d'échauffement (1) selon l'une quelconque des revendications précédentes, **caractérisée en ce que** le conducteur chauffant (5) comporte un segment à déformation thermique (W) s'étendant sensiblement librement entre les points de fixation (6a, 6b) dans la coupe transversale d'écoulement dont la déformation en cas d'échauffement du conducteur chauffant (5) est supérieure à celle de son environnement.

10. Bride d'échauffement (1) selon la revendication 9, **caractérisée en ce que** le segment à déformation thermique (W) présente une coupe transversale plus petite que son environnement.

11. Bride d'échauffement (1) selon la revendication 9 ou 10, **caractérisée en ce que** l'axe longitudinal du conducteur chauffant (5) présente un changement de direction dans le segment à déformation thermique (W).

12. Bride d'échauffement (1) selon l'une quelconque des revendications 9 à 11, **caractérisée en ce que** ledit au moins un conducteur chauffant (5) est plié entre les points de fixation (6a, 6b) au moins une fois à un point de brisure (14).

13. Bride d'échauffement (1) selon la revendication 12, **caractérisée en ce que** les points de brisure (14) des segments (5₁, 5₂, 5₃) d'un conducteur chauffant (5) et/ou de différents conducteurs chauffants (5, 5'), qui s'étendent à travers la coupe transversale d'écoulement (S), sont situés sensiblement sur une ligne.

14. Bride d'échauffement (1) selon l'une quelconque des revendications précédentes, **caractérisée en ce que** le conducteur chauffant (5) comporte des zones de stabilisation (SB) pourvues au moins partiellement de profils de renforcement (15) permettant d'augmenter la résistance à la flexion dans la direction longitudinale du conducteur chauffant (5).

15. Bride d'échauffement (1) selon la revendication 14, **caractérisée en ce qu'**un conducteur chauffant (5) sensiblement en forme de bande comporte au moins une nervure (15) s'étendant dans la direction longitudinale du conducteur chauffant (5).

16. Bride d'échauffement (1) selon l'une quelconque des revendications précédentes, **caractérisée en ce que** le conducteur chauffant (5) sur les points de fixation (6a, 6b) est relié sensiblement de manière rigide à la branche de maintien (2, 3) respective.

17. Bride d'échauffement (1) selon l'une quelconque des revendications précédentes, **caractérisée en ce qu'**un corps isolant (17) est prévu sur chaque point de fixation (6) d'une branche de maintien (2, 3) entre le conducteur chauffant (5) et la branche de maintien (2, 3) respective et fait fonction de corps de fixation permettant de fixer le conducteur chauffant (5) sur la branche de fixation respective (2, 3).

18. Bride d'échauffement (1) selon l'une quelconque des revendications précédentes, **caractérisée en ce que** le corps isolant (17) est relié au conducteur chauffant (5) à l'aide d'un moyen de fixation (20).

19. Bride d'échauffement (1) selon l'une quelconque des revendications précédentes, **caractérisée en ce que** le conducteur chauffant (5) et les corps isolants (17) reliés au conducteur chauffant (5) sont conçus sous la forme d'une unité (5, 17) manipulable d'un seul tenant.

20. Bride d'échauffement (1) selon la revendication 19, **caractérisée en ce que** l'unité (5, 17) manipulable d'un seul tenant peut être détachée plusieurs fois des points de fixation (6) de la branche de maintien (2, 3).

21. Bride d'échauffement (1) selon l'une quelconque des revendications précédentes, **caractérisée en ce qu'**un évidement (18) est formé sur le point de fixation (6) de telle sorte que le corps isolant (17) est logé dans l'évidement (18).

22. Bride d'échauffement (1) selon l'une quelconque des revendications précédentes, **caractérisée en ce que** le corps isolant (17) dans l'évidement (18) du point de fixation (6) est maintenu par force dans une direction d'enfichage sensiblement perpendiculaire à la coupe transversale d'écoulement (S) et par complémentarité de forme dans les deux axes spatiaux orientés perpendiculairement à la direction d'enfichage.

23. Bride d'échauffement (1) selon l'une quelconque des revendications précédentes, **caractérisée en ce que** le corps isolant (17) est formé en tant que plaque isolante (17).

24. Bride d'échauffement (1) selon l'une quelconque des revendications précédentes, **caractérisée en ce que** deux branches de maintien (2, 3) forment un cadre (2, 3) ouvert sous la forme d'un angle.

25. Bride d'échauffement (1) selon l'une quelconque des revendications précédentes, **caractérisée en ce que** les axes longitudinaux des branches de maintien (2, 3) sont disposés sensiblement perpendiculairement les uns par rapport aux autres.

26. Bride d'échauffement (1) selon l'une quelconque des revendications précédentes, **caractérisée en ce que** les branches de maintien (2, 3) forment un cadre avec une section sensiblement en forme de L dans un plan parallèle à la coupe transversale d'écoulement (S).

27. Bride d'échauffement (1) selon l'une quelconque des revendications précédentes, **caractérisée en ce qu'**au moins trois branches de maintien (2a, 2b, 2c, 3) de la bride d'échauffement forment un cadre (2a, 2b, 2c, 3) sensiblement fermé.

28. Bride d'échauffement (1) selon l'une quelconque des revendications précédentes, **caractérisée en ce qu'**une branche de maintien (2) du cadre (2, 3) est formée d'un seul tenant avec une bride de montage (7).

29. Bride d'échauffement (1) selon la revendication 28, **caractérisée en ce qu'**à l'état monté de la bride d'échauffement (1), un joint d'étanchéité (11) est disposé entre la bride de montage (7) et la conduite d'admission.

30. Bride d'échauffement (1) selon la revendication 24, **caractérisée en ce que** le cadre (2, 3) est réalisé sous forme de pièce moulée.
